# EUROPEAN PATENT APPLICATION

(11) **EP 1 947 370 A1**
(43) Date of publication of application: **23.07.2008**
(21) Application number: 06811743.1
(22) Date of filing: 13.10.2006
(51) Int. Cl.: F16H 55/36, F16F 1/48, F16H 7/12

(54) **PULLEY APPARATUS AND AUTO-TENSIONER**

(30) Priority: 14.10.2005 JP 2005299916; 14.10.2005 JP 2005299943; 14.10.2005 JP 2005299975; 14.10.2005 JP 2005299970
(71) Applicant: JTEKT Corporation, Osaka-shi Osaka 542-8502 (JP)
(72) Inventor: HARADA, Masahiro, Osaka-shi, Osaka 5428502 (JP); UENO, Hiroshi, Osaka-shi, Osaka 5428502 (JP)
(74) Representative: Sajda, Wolf E.
(86) International application number: PCT/JP2006/320464
(87) International publication number: WO 2007/043650

(57) **Abstract**

A pulley assembly of the invention is adapted to impart torsion spring capability between an inside member and an outside member by means of a simple structure. By virtue of the torsion spring capability, the pulley assembly can effectively reduce the variation of belt tension exerted on a pulley portion disposed at either one of the inside member and the outside member, the variations of rotational speed and the like.

## Description

### Technical Field

The present invention relates to a pulley assembly and an auto tensioner.

### Background Art

Engine auxiliaries of a motor vehicle or the like are driven by torque of a crankshaft which is extracted by a driving mechanism using a belt. In this driving mechanism, a pulley assembly about which the belt is trained includes a crankshaft pulley assembly mounted to the crankshaft, an alternator pulley assembly mounted to an alternator and an auto tensioner including a pulley for maintaining a constant tension of the belt.

The engine crankshaft to which the crankshaft pulley assembly is mounted is varied in rotational velocity because the torque is imparted to the engine crankshaft by an explosive power of a cylinder. If such a varied rotational velocity of the crankshaft is transmitted to the engine auxiliaries by means of the belt, the auxiliaries subjected to inertia caused by the rotation cannot follow the variation of rotational velocity.
This may lead to an unduly varied belt tension or slippage between the pulley assembly and the belt. Such belt slippage and unduly varied belt tension may result in the occurrence of belt noises or the decrease of service life. In some cases, an initial tension of the belt may be set to a comparatively high level in order to avoid the belt slippage. In this case, the crankshaft is increased in rotational resistance so that the engine may be lowered in mileage performance.
Since the crankshaft itself is not formed in an axially symmetrical shape, the rotational velocity variation of the crankshaft also causes torsional vibrations or undulations of the crankshaft.

In this connection, a crankshaft pulley assembly such as set forth in Japanese Unexamined Patent Publication No.2003-172 03 has been proposed, seeking to relieve other parts from being affected by the rotational velocity variation of the crankshaft. The crankshaft pulley assembly includes: a pulley boss mounted to a crankshaft; a cylindrical pulley member about an outer periphery of which a belt is trained; and a damper rubber interposed between the pulley boss and the pulley member.
According to such a pulley assembly, the damper rubber formed from an elastic material is interposed between the pulley member and the crankshaft for elastically permitting these members to rotate relative to each other in circumferential directions, whereby the pulley member is adapted to function as a damper mass for the crankshaft. Thus, the pulley assembly can attain a damper action. By virtue of the damper action, the pulley assembly is adapted to accommodate the vibrations of the crankshaft and to reduce the rotational velocity variation of the crankshaft.
The damper action for reducing the rotational velocity variation of the crankshaft, which is provided by the above-described conventional crankshaft pulley assembly, is largely dependent upon an elastic property of the damper rubber. The elastic property of the damper rubber can be modified by changing the material or thickness of the elastic material forming the damper rubber.
However, this method does not offer such a wide modifiable range of elastic property and hence, the freedom of modification is low. Accordingly, some of the above-described conventional pulley assemblies may fail to achieve an effective reduction of the vibrations or rotational velocity variation of the crankshaft because of the inability to define the elastic property of the damper rubber properly.

In the alternator to which the alternator pulley assembly is mounted, on the other hand, a comparatively heavy armature and the like rotate unitarily with an input shaft of the alternator pulley assembly. If the rotational velocity of the crankshaft is varied rapidly, the armature may sometimes be unable to follow the varied rotational velocity of the crankshaft due to the inertia force caused by the rotation thereof. If the alternator cannot follow the varied rotational velocity described above, a temporary difference occurs between the rotational velocities of the crankshaft and the alternator, which may cause slippage between the pulley assembly and the belt or an excessive variation of the belt tension.
Such a belt slippage or excessive variation of the belt tension may result in the occurrence of belt noises or the decreased service life of the belt. There is a case where the initial tension of the belt is set to a comparatively high level in order to avoid the belt slippage. This approach may entail the problem that the crankshaft is increased in the rotational resistance so as to lower the mileage performance of the engine.

As set forth in Japanese Unexamined Patent Publication No.H6(1994)-207 525, for example, an alternator pulley assembly has been proposed which is directed to allow for the rotational velocity variation transmitted from the crankshaft. The alternator pulley assembly includes: a pulley member formed with a pulley groove on an outer periphery thereof about which a belt is trained; a pulley boss disposed in relatively rotatable relation to the pulley member and unitarily rotatably mounted to an input shaft of an alternator; and a torsion coil spring interconnecting the pulley member and the pulley boss.
In the above-described conventional alternator pulley assembly, the torsion coil spring has one end thereof anchored to the pulley member and the other end thereof anchored to the pulley boss. The alternator pulley assembly is constituted such that the torsion coil spring is twisted when the pulley member and the pulley boss are rotated relative to each other. An elastic force produced by twisting the torsion coil spring is used for elastically bringing the pulley member and pulley boss into a temporary relative rotation in circumferential directions, whereby the rotational velocity variation is reduced.
According to the above-described conventional alternator pulley assembly, a characteristic of reducing the rotational variation of the pulley member relative to the pulley boss is dependent upon the above-described torsion coil spring. However, this torsion coil spring is limited in size such as to be as small as assembled in the alternator pulley assembly.
Hence, the torsion coil spring is limited in the wire diameter, free length, number of turns thereof and the like, making it impossible to define the characteristics of the torsion coil spring freely. Consequently, the alternator pulley assembly suffers a limited freedom of defining the characteristic of reducing the rotational variation. This leads to a fear that the pulley assembly may be incapable of fully reducing the rotational velocity variation of the crankshaft.

As described above, the conventional crankshaft pulley assembly and alternator pulley assembly may sometimes be unable to fully reduce the rotational velocity variation of the crankshaft.

As set forth in Japanese Unexamined Patent Publication No.H7(1995)-004 481, for example, the auto tensioner used in the above driving mechanism includes a pulley at a distal end of a swing arm swingable about a support portion fixed to the engine or the like, the pulley having the above belt trained thereabout. The swing arm is capable of being elastically swung by an elastic force produced by a torsion coil spring mounted to place between the swing arm and the support portion.
Such an auto tensioner imparts a certain tension to the belt by urging the pulley in a predetermined swinging direction. At the same time, the elastic swinging movement of the swing arm can absorb the tension variation of the belt caused by the rotational velocity variation of the engine or the like. Thus, the auto tensioner can prevent the belt vibrations and noises, ensuring the intrinsic service life of the belt. Further, the auto tensioner is also adapted to accommodate mounting errors of the auxiliaries, dimensional changes thereof due to temperature variations, belt length variation and the like.
According to the above-described conventional auto tensioner, the swing arm depends upon the above torsion coil spring for its characteristic of absorbing the belt tension variation. However, the torsion coil spring suffers restriction on its wire diameter, its free length, the number of windings and the like because the torsion coil spring is limited to such a size as to be assembled in the auto tensioner. This makes it impossible to define the elastic force characteristic of the torsion coil spring freely. Hence, the auto tensioner is limited in the freedom of defining the characteristic of accommodating the belt tension variation. In some cases, the auto tensioner may be unable to accommodate the belt tension variation fully.

In view of the foregoing, the invention seeks to provide a pulley assembly and an auto tensioner which are capable of effectively reducing and accommodating the rotational velocity variation of the crankshaft or the belt tension variation.

### Disclosure of the Invention

According to the invention, a pulley assembly for driving engine auxiliaries by means of a belt, comprises: a cylindrical pulley member having the belt trained about an outer periphery thereof and including an outer raceway surface on an inner periphery thereof; an inside member including, on an outer periphery thereof, an inner raceway surface opposing the outer raceway surface and disposed in relatively rotatable relation to the pulley member; and a rolling element rollably interposed between the outer raceway surface and the inner raceway surface, and is characterized in that at least one of the inner raceway surface and the outer raceway surface is at least partially formed with a deformed raceway surface which, in conjunction with a relative rotation between the pulley member and the inside member, progressively narrows a clamping gap for the rolling element as allowing the rolling movement of the rolling element and imparts a rotational urging force between the pulley member and the inside member in a direction to eliminate a phase difference between the pulley member and the inside member, the phase difference caused by the relative rotation.

The pulley assembly of the above constitution is adapted to impart a rotational urging function (hereinafter, also referred to as "torsion spring capability") between the pulley member and the inside member by means of a simple structure without a torsion coil spring or the like. By virtue of this torsion spring capability, the pulley assembly can elastically bring these members into the relative rotation thereby effectively reducing the variation of belt tension exerted on the pulley portion, the variation of rotational velocity and the like.
The characteristic of the torsion spring capability provided by the above constitution may be altered in various ways by changing the configuration of the deformed raceway surface, the outside diameter of the rolling element and the like. Hence, the pulley assembly is dramatically increased in the freedom of defining the characteristic of torsion spring capability.

The above pulley assembly may have the inside member unitarily rotatably mounted to an input shaft of an alternator whereby the pulley assembly is used as an alternator pulley assembly.
In this case, the alternator pulley assembly can take advantage of the above-described torsion spring capability for elastically bringing the pulley member and the input shaft into the relative rotation in circumferential directions thereby reducing the rotational velocity variation caused by the crankshaft and transmitting the torque to the input shaft of the alternator.
Further, the characteristic of the torsion spring capability provided by the above constitution may be altered in various ways by changing the configuration of the deformed raceway surface, the outside diameter of the rolling element and the like. Hence, this pulley assembly is dramatically increased in the freedom of defining the characteristic of torsion spring capability. This makes it possible to impart a favorable elastic force characteristic to the pulley assembly according to the specifications of an alternator to which the pulley assembly is mounted, the engine characteristics or the like.

The above pulley assembly may have the inside member unitarily rotatably mounted to a crankshaft whereby the pulley assembly is used as a crankshaft pulley assembly.
In this case, the crankshaft pulley assembly can take advantage of the above-described torsion spring capability for elastically bringing the pulley member and the crankshaft into the relative rotation in circumferential directions thereby permitting the pulley member to function as a damper mass for the crankshaft such as to reduce the vibrations of the crankshaft and thereby reducing the rotational velocity variation of the crankshaft.
In addition, the characteristic of the torsion spring capability provided by the above constitution may be altered in various ways by changing the configuration of the deformed raceway surface, the outside diameter of the rolling element and the like. Hence, this pulley assembly is dramatically increased in the freedom of defining the characteristic of torsion spring capability. This makes it possible to impart a favorable elastic force characteristic to the pulley assembly according to the specifications, characteristics or the like of the engine to which the pulley assembly is mounted.

It is preferred in the above pulley assembly that a rolling bearing is interposed between the pulley member and the inside member for coaxially supporting these members.
In this case, the rolling bearing can bear a radial load exerted on the pulley member so that external load exerted on the deformed raceway surface and the rolling element may be reduced. Therefore, the pulley assembly can attain the above-described torsion spring capability in a more stable manner.

According to the invention, an auto tensioner comprises: a swing arm including a cylindrical base end portion formed with an outer raceway surface on an inner periphery thereof, and an arm extended from the base end portion and having a pulley rotatably fixed thereto, the pulley having a belt trained thereabout; a support member including, on an outer periphery thereof, an inner raceway surface opposing the outer raceway surface and relatively rotatably supporting the base end portion thereby swingablly supporting the swing arm; and a rolling element rollably interposed between the outer raceway surface and the inner raceway surface, and is characterized in that at least one of the inner raceway surface and the outer raceway surface is at least partially formed with a deformed raceway surface which, in conjunction with a relative rotation between the base end portion and the support member, progressively narrows a clamping gap for the rolling element as allowing the rolling movement of the rolling element and imparts a rotational urging force between the base end portion and the support member in a direction to eliminate a phase difference between the base end portion and the support member, the phase difference caused by the relative rotation, and that the swing arm is urged in a predetermined swinging direction by the rotational urging force.

The auto tensioner of the above constitution is adapted to impart the rotational urging function between the base end portion and the support member by means of a simple structure without a torsion coil spring or the like. By virtue of this torsion spring capability, the auto tensioner can elastically bring the swing arm into swinging movement for urging the swing arm in the predetermined swinging direction. Thus, the auto tensioner can impart a tension to the belt trained about the pulley.
The characteristic of the torsion spring capability provided by the above constitution may be altered in various ways by changing the configuration of the deformed raceway surface, the outside diameter of the rolling element and the like. Hence, the auto tensioner is dramatically increased in the freedom of defining the characteristic of torsion spring capability. This makes it possible to define a favorable elastic force characteristic for swinging movement of the swing arm according to the characteristics, specifications or the like of the engine.

It is preferred in the above auto tensioner that a rolling bearing is interposed between the base end portion and the support member for relatively rotatably supporting these members.
In this case, the rolling bearing can bear a radial load exerted on the base end portion so that an external load exerted on the deformed raceway surface and the rolling element may be reduced. Therefore, the auto tensioner can attain the above-described torsion spring capability in a more stable manner.

### Brief Description of the Drawings

- FIG. 1: is an axial sectional view showing an essential part of an alternator pulley assembly according to a first embodiment of the invention;
- FIG. 2: is a sectional view taken on the line II-II in FIG. 1;
- FIG. 3: is a sectional view for explaining a rotational urging force induced by relative rotation between a pulley boss and a pulley member;
- FIG. 4: is a sectional view of a pulley assembly according to a second embodiment of the invention;
- FIG. 5: is a sectional view for explaining a rotational urging force induced by relative rotation between a pulley boss and a pulley member of the pulley assembly of the second embodiment;
- FIG. 6: is a graphical representation of an example of measurements taken on the moment-to-moment change of rotational velocity of the pulley member and on the moment-to-moment change of rotational velocity of a shaft;
- FIG. 7: is a graphical representation of a relation between each of the amplitudes h and i in FIG. 6 and the frequency of the cyclic rotational velocity variation of the pulley member;
- FIG. 8: is an axial sectional view showing an essential part of a crankshaft pulley assembly according to a third embodiment of the invention;
- FIG. 9: is a sectional view taken on the line IX-IX in FIG. 8;
- FIG. 10: is an axial sectional view showing an essential part of a crankshaft pulley assembly wherein inner raceway surfaces, outer raceway surfaces and cylindrical rollers are arranged in radial double rows, respectively;
- FIG. 11: is a sectional view taken on the line XI-XI in FIG. 10;
- FIG. 12: is a sectional view of an auto tensioner according to a fourth embodiment of the invention;
- FIG. 13: is a side view of the auto tensioner;
- FIG. 14: is an enlarged view of a cross section taken on the line D-D in FIG. 12;
- FIG. 15: is a sectional view (cross section including an axis) of an urging device;
- FIG. 16: is a sectional view of the urging device taken on the line A-A in FIG. 15;
- FIG. 17: is a sectional view of the urging device taken on the line B-B in FIG. 15;
- FIG. 18: is a sectional view for explaining the principle of development of spring capability in the urging device and showing in enlarged dimension a neighborhood of a cylindrical roller of the urging device in an initial state shown in FIG. 15;
- FIG. 19: is a sectional view of the urging device for illustrating a state where the components are relatively displaced from the initial state shown in FIG. 18 by an axial distance x;
- FIG. 20: is a sectional view showing an exemplary modification of the urging device; and
- FIG. 21: is a sectional view of the urging device taken on the line C-C in FIG. 20.

### Best Modes for Carrying Out the Invention

Next, the preferred embodiments of the invention will be described with reference to the accompanying drawings.

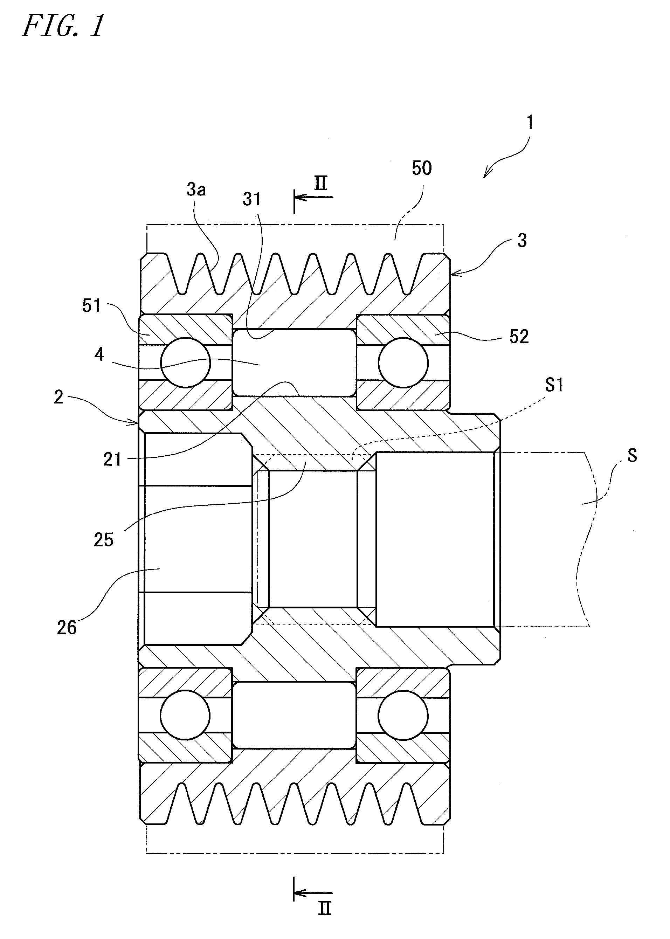

FIG. 1 is an axial sectional view showing an essential part of an alternator pulley assembly according to a first embodiment of the invention. An alternator pulley assembly 1 (hereinafter, simply referred to as "pulley assembly 1") is mounted to an input shaft of an alternator used as an auxiliary machine of a motor vehicle or the like. A belt for transmitting a torque from an engine crankshaft is trained about the pulley assembly 1.

This pulley assembly 1 includes: a pulley boss 2 as an inside member generally formed in a cylindrical shape; a pulley member 3 as a cylindrical outside member coaxially disposed on an outer peripheral side of the pulley boss 2; a cylindrical roller 4 as a rolling element rollably interposed between the pulley boss and the pulley member; and two rolling bearings 51, 52 disposed between the pulley boss 2 and the pulley member 3 as located on axially opposite sides of the cylindrical roller 4.
The pulley member 3 is formed with a corrugated groove 3a on an outer periphery thereof such that a belt 50 for transmitting a torque from a crankshaft of an automobile engine may be trained about the pulley member. The pulley member 3 is further formed with an outer raceway surface 31 on an inner periphery thereof such that the cylindrical rollers 4 may roll on it.
The pulley boss 2 is formed with an inner raceway surface 21 on an outer periphery thereof such that the cylindrical rollers 4 may roll on it. The inner raceway surface 21 opposes the outer raceway surface 31. An input shaft S projected from an unillustrated alternator is inserted in an inner periphery of the pulley boss 2. The inner periphery of the pulley boss 2 is integrally formed with an internal thread 25 at an axially central part thereof.
The internal thread 25 is threadedly engaged with an external thread S 1 formed at an end of the input shaft S, whereby the pulley boss 2 is mounted to the input shaft S in a unitarily rotatable relation therewith. The inner periphery of the pulley boss 2 is further formed with a wrench socket 26 at an end thereof. The wrench socket 26 has an equilateral hexagonal inside surface such as to allow a hexagon wrench to be inserted therein for threadedly engaging the pulley boss 2 with the input shaft S.
The rolling bearings 51, 52 are interposed between the pulley boss 2 and the pulley member 3 thereby permitting these members to rotate relative to each other and also bearing a radial load exerted on the pulley member 3.

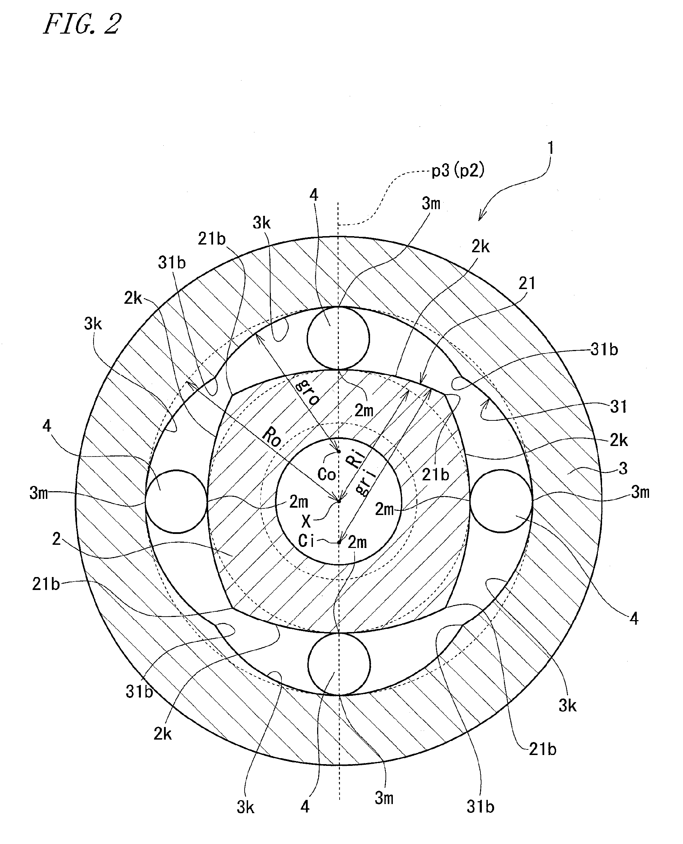

Next, description is made on the inner raceway surface 21 and the outer raceway surface 31 provided at the pulley boss 2 and the pulley member 3, respectively. FIG. 2 is a sectional view taken on the line II-II in FIG. 1. The inner raceway surface 21 of the pulley boss 2 is constructed by continuously forming four inner deformed raceway surfaces 2k as four deformed raceway surfaces each defined by a circumferential surface deformed from a circumferential surface about a rotation axis X of the pulley boss 2 and pulley member 3. The outer raceway surface 31 is constructed by continuously forming four outer deformed raceway surfaces 3k as four deformed raceway surfaces.
All the inner deformed raceway surfaces 2k constituting the inner raceway surface 21 are of the same configuration, and all the outer deformed raceway surfaces 3k constituting the outer raceway surface 31 are also of the same configuration. The inner raceway surface 21 is equally divided into four circumferential segments (at 90° angular space intervals), each of which defines the inner deformed raceway surface 2k. Similarly, the outer raceway surface 31 is also equally divided into four circumferential segments (at 90° angular space intervals), each of which defines the outer deformed raceway surface 3k. One cylindrical roller 4 is disposed between a respective pair of deformed raceway surfaces 2k, 3k.
The inner deformed raceway surface 2k and the outer deformed raceway surface 3k define a diminishing space (wedge-shaped space) between the pulley boss 2 and the pulley member 3, the diminishing space progressively decreased in race-to-race distance in the circumferential direction. In conjunction with the relative rotation between the pulley boss 2 and the pulley member 3, a so-called wedge effect occurs to subject the cylindrical roller 4 to elastic compressive deformation.
As described above, the inner raceway surface 21 and the outer raceway surface 31 are individually constructed by continuously forming the deformed raceway surfaces 2k, 3k so that the inner raceway surface 21 and the outer raceway surface 31 consist solely of the deformed raceway surfaces 2k, 3k, respectively. What is more, the deformed raceway surfaces 2k, 3k are circumferentially arranged with equal spacing. Hence, each of the deformed raceway surfaces 2k, 3k is maximized in circumferential range, contributing to the expansion of the circumferential range in which a rotational urging force is obtained.

Next, a detailed description is made on contour shapes of the outer deformed raceway surface 3k and the inner deformed raceway surface 2k.
The four outer deformed raceway surfaces 3k constituting the outer raceway surface 31 are each formed in a concave curve. Specifically, the outer deformed raceway surface 3k is defined by a circumferential surface about a center of outer race curvature Co located closer to the raceway surface (the outer deformed raceway surface 3k of interest) than to the rotation axis X of the pulley boss 2 and pulley member 3 (hereinafter, also referred to as "shaft center X").
A curvature radius gro of this outer deformed raceway surface 3K is the maximum distance between the outer raceway surface 31 and the shaft center X, and is smaller than an outer-race gauge radius Ro equivalent to a radius of a circle circumscribed with a contour of a cross section of the outer raceway surface 31. As seen in the section, the outer-race curvature center Co with respect to each of three outer deformed raceway surfaces 3k is located on a straight line p3 including an outer-race maximum radius point 3m and the shaft center X, the outer-race maximum radius point 3m defining the maximum distance from the shaft center X.

The four inner deformed raceway surfaces 2k constituting the inner raceway surface 21 are each formed in a convex curve. Specifically, the inner deformed raceway surface 2k is defined by a circumferential surface about a center of inner race curvature Ci located farther from the raceway surface (the inner deformed raceway surface 2k of interest) than from the shaft center X.
A curvature radius gri of this inner deformed raceway surface 2k is the minimum distance between the inner raceway surface 21 and the shaft center X, and is greater than an inner-race gauge radius Ri equivalent to a radius of a circle inscribed in a contour of a cross section of the inner raceway surface 21. As seen in the section, the inner-race curvature center Ci with respect to each of three inner deformed raceway surfaces 2k is located on a straight line p2 including an inner-race minimum radius point 2m and the shaft center X, the inner-race minimum radius point 2m defining the minimum distance from the shaft center X.

The pulley assembly 1 including the inner raceway surface 21 and outer raceway surface 31, having the above-described configurations, has a rotational urging function (torsion spring function). The following description is made on this regard.
Since the inner raceway surface 21 and the outer raceway surface 31 are not defined by the circumferential surfaces about the shaft center X, as described above, the configuration of a space (roller rolling space) defined between the inner raceway surface 21 and the outer raceway surface 31 varies according to a relative phase relation between the pulley boss 2 and the pulley member 3. FIG. 2 shows a state where the outer-race maximum radius point 3m of the outer raceway surface 31 is in phase with the inner-race minimum radius point 2m of the inner raceway surface 21.
Hereinafter, this state will be referred to as "reference state". In this reference state, each of the cylindrical rollers 4 is located at a circumferential position to make contact with the inner-race minimum radius point 2m and the outer-race maximum radius point 3m. This reference state provides the widest clamping gap for the cylindrical roller 4 (race-to-race distance as determined at a contact position of the cylindrical roller 4) which gap is defined between the outer deformed raceway surface 3k and the inner deformed raceway surface 2k. In this reference state, therefore, a compressive force exerted on the cylindrical roller 4 by these raceway surfaces 2k, 3k is at the minimum value (e.g., 0).
The reference state is designed such that a radial distance between the inner-race minimum radius point 2m and the outer-race maximum radius point 3m is substantially equal to a diameter of the cylindrical roller 4. However, a minor radial clearance (plus clearance or minus clearance) may also be provided.

Subsequently when the pulley boss 2 and the pulley member 3 are rotated relative to each other from this reference state, the cylindrical rollers 4 are rolled while the clamping gaps for the cylindrical rollers 4 are progressively narrowed. In conjunction with the relative rotation, therefore, the cylindrical rollers 4 undergo the elastic compressive deformation as compressed by the inner raceway surface 21 and the outer raceway surface 31. Hence, the cylindrical rollers 4 impart a rotational urging force (elastic force: torsion spring force) between the pulley boss 2 and the pulley member 3 in a direction to eliminate a phase difference caused by the relative rotation.

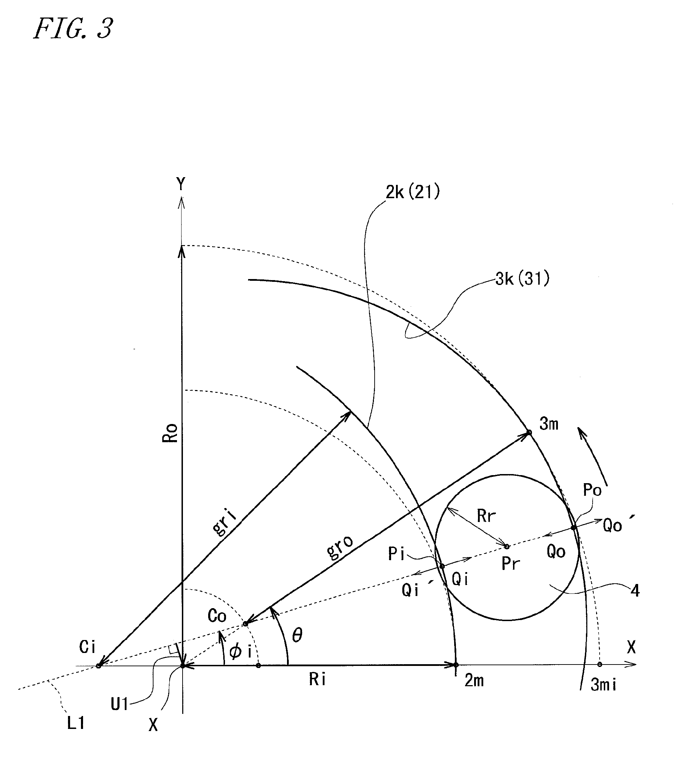

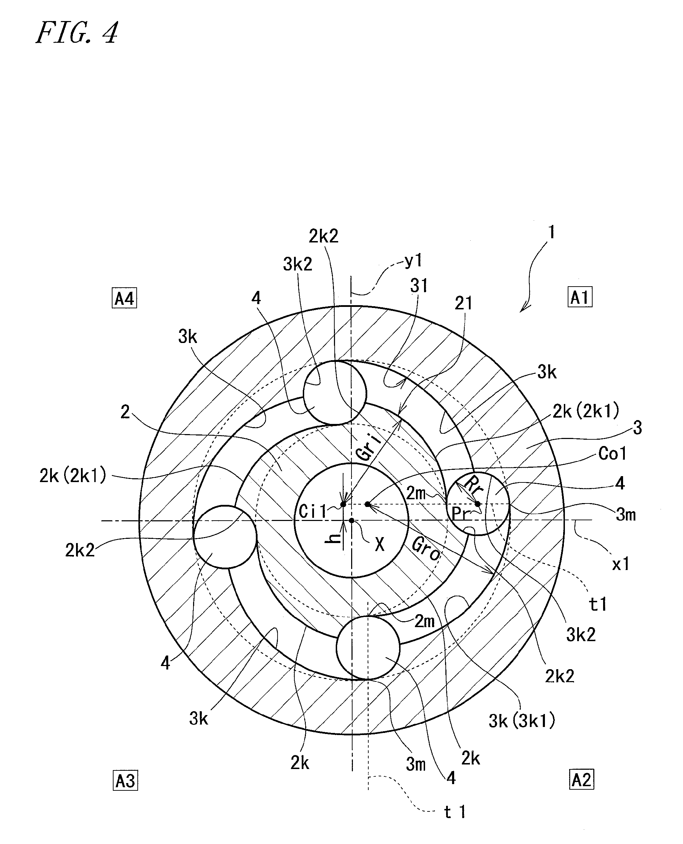

A more detailed description is made on how the above-described rotational urging force (torsion spring force) develops. FIG. 3 is a sectional view for explaining the rotational urging force induced by the relative rotation between the pulley boss 2 and the pulley member 3. The figure only shows profile lines of the inner deformed raceway surface 2k, outer deformed raceway surface 3k and cylindrical roller 4 in the interest of easy understanding. FIG. 3 shows a balanced state where the pulley boss 2 is fixed to place while the pulley member 3 is rotated counterclockwise through an angle θ so as to be brought to standstill.
In the reference state, the outer-race maximum radius point 3m is located at a position 3mi on an x axis of FIG. 3 and the inner-race minimum radius point 2m is also located on the x axis. In this reference state, a center Pr of the cylindrical roller 4 is also located on the x axis. When the pulley member 3 is rotated counterclockwise through the angle θ from such a reference state, the cylindrical roller 4 is rolled counterclockwise to a position shown in FIG. 4. A revolution angle of the cylindrical roller 4 thus rolled is an angle Øi with respect to the inner-race curvature center Ci.

Provided that Pi represents the center of contact position between the inner deformed raceway surface 2k and the cylindrical roller 4 and that Po represents the center of contact position between the outer deformed raceway surface 3k and the cylindrical roller 4, a distance between Pi and Po at this time is smaller than the distance between the inner-race minimum radius point 2m and the outer-race maximum radius point 3m in the reference state and is smaller than the diameter 2Rr of the cylindrical roller 4 (twice the radius Rr of the cylindrical roller 4).
Therefore, the cylindrical roller 4 undergoes the compressive elastic deformation as receiving a perpendicular force Qi from the inner raceway surface 21 and a perpendicular force Qo from the outer raceway surface 31. In a state where the forces are balanced with each other so that the roller is at standstill, very little tangential force is exerted on the cylindrical roller 4 and the points Ci, Co, Pi, Pr, Po are on a straight line L1, as shown in FIG. 3. Thus, vectors of the above perpendicular forces Qi and Qo are in the same direction as the straight line L1 so that a perpendicular force Qi' applied to the pulley boss 2 by the cylindrical roller 4 and a perpendicular force Qo' applied to the pulley member 3 by the cylindrical roller 4 are also in the same direction as the straight line L1.
The perpendicular force Qo' applied to the pulley member 3 by the cylindrical roller 4 is deviated from a radial direction of the pulley assembly 1 (direction from the center Po of contact position with the cylindrical roller 4 to the shaft center X) so that the perpendicular force includes a component in the radial direction and a component in the clockwise direction. Thus, the pulley member 3 receives a clockwise moment (hereinafter, also referred to as "rotational urging moment") which provides a rotational urging member (torsion spring capability). The magnitude of the rotational urging moment is expressed as [(magnitude of vector Qo') ×[(distance U1 from shaft center X to straight line L1)].

As described above, the inner deformed raceway surface 2k is the convex curve and the outer deformed raceway surface 3k is the concave curve. Furthermore, the inner deformed raceway surfaces 2k and the outer deformed raceway surfaces 3k form the respective smoothly-connected curves. The curve of the inner raceway surface 21 lacks in smooth continuity only at a boundary position 21b between a respective pair of adjoining inner deformed raceway surfaces 2k (see FIG. 2). The curve of the outer raceway surface 31 lacks in smooth continuity only at a boundary position 31b between a respective pair of adjoining outer deformed raceway surfaces 3k (see FIG. 2).
Therefore, unless the contact positions between the cylindrical roller 4 and the raceway surfaces reach these boundary positions 21b, 31b, the race-to-race distance at the contact position of the cylindrical roller 4 is progressively varied in conjunction with the relative rotation between the pulley boss 2 and the pulley member 3.
Thus, the above mechanism explained with reference to FIG. 3 imparts the rotational urging force between the pulley boss 2 and the pulley member 3 in the direction to eliminate the phase difference caused by the relative rotation between the pulley boss 2 and the pulley member 3.

The pulley assembly 1 of the above-described constitution is adapted to impart the rotational urging function (torsion spring capability) by means of the simple structure without a torsion coil spring or the like. That is, this torsion spring capability elastically permits the pulley member 3 and the pulley boss 2 to rotate relative to each other in the circumferential directions and hence, the pulley assembly can transmit the torque to the input shaft S of the alternator as reducing the rotational velocity variation which is attributable to the crankshaft and transmitted via the belt 50.
The characteristic of the torsion spring capability provided by the above-described constitution may be altered in various ways by changing the configurations of the deformed raceway surfaces 2k, 3k, the outside diameter of the cylindrical roller 4 or the like. This leads to an extremely high degree of freedom of defining the characteristic. It is therefore possible to impart a favorable elastic force characteristic to the alternator pulley assembly 1 according to the specifications of the alternator, the engine characteristics or the like. Hence, the pulley assembly is capable of more effectively reducing the rotational velocity variation transmitted from the crankshaft.

As described above, the alternator pulley assembly 1 is capable of effectively reducing the rotational velocity variation transmitted from the crankshaft and hence, slippage between the belt 50 and the pulley can be more effectively suppressed as compared with a case where the conventional pulley assembly is employed. Accordingly, an initial tension of the belt 50 may be set to a lower value than that of the conventional pulley assembly whereby load on the crankshaft is reduced and the engine is improved in mileage performance.

In a case where a roller rolling region between the cylindrical roller 4 and the inner raceway surface 21 and outer raceway surface 31 is lubricated with a lubricant such as oil or grease, viscous rolling resistance and agitating resistance of the lubricant associated with the rolling motion of the cylindrical roller 4 can impart a damping function to the pulley assembly 1 of the above embodiment.
The pulley assembly attains both the torsion spring capability and the damping function to damp an exerted external force and the rotational urging force as a reaction force to the external force. Thus, the pulley assembly 1 of the embodiment is adapted to damp and reduce resonance or the like induced by the torsion spring capability.

In this pulley assembly 1, the rolling bearings 51, 52 are interposed between the pulley boss 2 and the pulley member 3 so that these bearings may bear the radial load exerted on the pulley member 3. Thus is reduced an external load exerted on these deformed raceway surfaces 2k, 3k and the cylindrical rollers 4 and hence, a load required for generating the rotational urging force can be stably exerted on these deformed raceway surfaces 2k, 3k and cylindrical rollers 4. Thus, the pulley assembly 1 is adapted to provide a more stable rotational urging force.

As compared with the conventional pulley assembly using the torsion coil spring, the pulley assembly of the embodiment can achieve a longer service life because this pulley assembly is adapted to suppress deterioration resulting from continuous operation or change in characteristics with time. Furthermore, a peripheral structure of the pulley assembly is simplified so that the pulley assembly can achieve the reduction of the number of parts, the reduced assembly cost, the increased reliability, and the size reduction thereof.

FIG. 4 is a sectional view of an alternator pulley assembly 1 according to a second embodiment of the invention. A major difference between the first embodiment and the second embodiment consists in that the inner raceway surface 21 and outer raceway surface 31 of the second embodiment are configured such that the direction of relative rotation in which the torsion spring capability is provided is limited to one direction. The other parts are arranged the same way as in the first embodiment and hence, the description thereof is dispensed with.

Each of the deformed raceway surfaces 2k, 3k of the pulley assembly 1 of the embodiment is not defined by a curve having a single curvature radius but by a curve having two curvature radii. Specifically, each of the inner deformed raceway surfaces 2k consists of an inner rolling surface 2k1 having a curvature radius Gri, and an inner roller retaining surface 2k2 having the same curvature radius as the radius Rr of the cylindrical roller 4.
One end of the inner rolling surface 2k1 (on the smaller diameter side thereof) defines the inner-race minimum radius point 2m which defines a boundary between the inner rolling surface 2k1 and the inner roller retaining surface 2k2. The inner rolling surface 2k1 and the inner roller retaining surface 2k2 are smoothly connected at the inner-race minimum radius point 2m.
Each of the outer deformed raceway surfaces 3k consists of an outer rolling surface 3k1 having a curvature radius Gro, and an outer roller retaining surface 3k2 having the same curvature radius as the radius Rr of the cylindrical roller 4. One end of the outer rolling surface 3k1 (on the greater diameter side thereof) defines the outer-race maximum radius point 3m which defines a boundary between the outer rolling surface 3k1 and the outer roller retaining surface 3k2. The outer rolling surface 3k1 and the outer roller retaining surface 3k2 are smoothly connected at the outer-race maximum radius point 3m.

FIG. 4 shows a state where the cylindrical roller 4 is in contact with the outer-race maximum radius point 3m and the inner-race minimum radius point 2m and is in surface contact with the inner roller retaining surface 2k2 and the outer roller retaining surface 3k2. This state is the reference state of the pulley assembly 1 of this embodiment. In this reference state, the compressive force exerted on the cylindrical rollers 4 by the raceway surfaces 21, 31 is at the minimum value (e.g., 0).
The constitution is made such that the pulley boss 2 and the pulley member 3 are allowed to rotate relative to each other in only one direction from the reference state. Let us assume a case where the pulley boss 2 is fixed and the pulley member 3 is allowed to rotate, for example. In the reference state shown in FIG. 4, the pulley member 3 can be rotated only in the counterclockwise direction but cannot be rotated in the clockwise direction.

Next, a detailed description is made on the contour shapes of the outer deformed raceway surface 3k and the inner deformed raceway surface 2k. Of the deformed raceway surfaces 2k, 3k of the pulley assembly 1 of the embodiment, the inner rolling surface 2k1 and the outer rolling surface 3k1 on which the cylindrical roller 4 is rolled have their curvature centers located at different positions from those of the first embodiment.
Provided that in the cross section of FIG. 4 showing the reference state, straight lines parallel to a straight line t1 connecting the outer-race maximum radius point 3m with the inner-race minimum radius point 2m and passing through the shaft center X are defined as a first straight line x1 and a second straight line y1. As shown in FIG. 4, the first straight line x1 and the second straight line y1 are perpendicular to each other.
These first straight line x1 and second straight line y1 divide the cross section of FIG. 4 into the same number of regions as the equally spaced rollers (namely, four) (an upper right region A1, a lower right region A2, a lower left region A3 and an upper left region A4 in the clockwise order starting from the upper right region of FIG. 4). It is noted here that a curvature center Ci1 of an inner rolling surface 2k1 primarily belonging to the region A1, for example, belongs to the region A4. A curvature center Co1 of an outer rolling surface 3k1 primarily belonging to the region A2, for example, belongs to the region A1.
That is, the curvature center of the inner rolling surface 2k1 primarily belonging to any one of the four regions divided by the above straight lines x1 and y1 is located in another region adjacent thereto in the rotational direction of the pulley member in which direction the torsion spring capability is provided (in the counterclockwise direction in this pulley assembly 1). Similarly, the curvature center of the outer rolling surface 3k1 primarily belonging to any one of the above four regions is located in another region adjacent thereto in the rotational direction of the pulley member in which direction the torsion spring capability is provided.

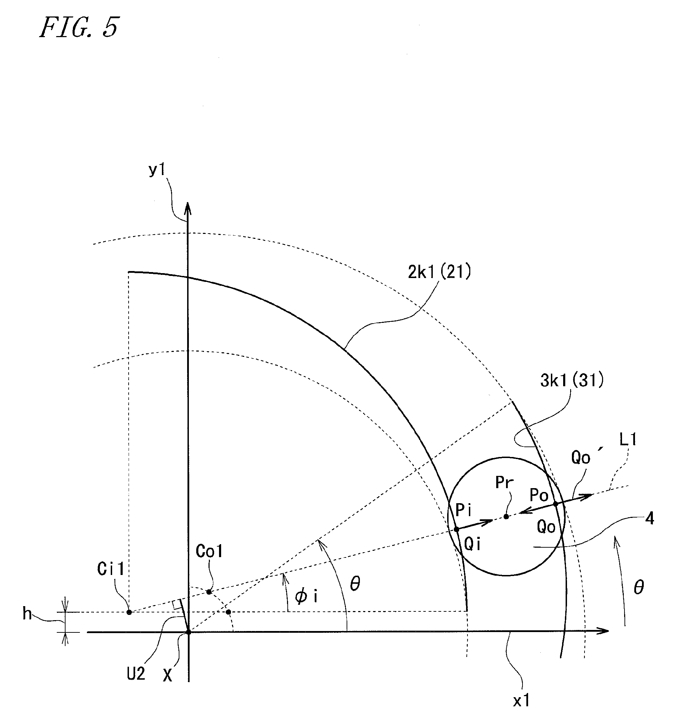

FIG. 5 shows a balanced state where the pulley boss 2 of the pulley assembly 1 of the embodiment in the reference state is fixed to place while the pulley member 3 is rotated counterclockwise through an angle θ so as to be brought to standstill. The rotation of the pulley member 3 causes the cylindrical roller 4 to roll and revolute through an angle øi about the curvature center Ci 1 of the inner rolling surface 2k1.
At this time, the perpendicular force Qo' applied to the pulley member 3 by the cylindrical roller 4 is in the same direction as the straight line L1 connecting the center of contact position Po between the cylindrical roller 4 and the outer raceway surface 31 with the curvature center Ci1 of the inner rolling surface 2k1, just as described with reference to FIG. 4.
Therefore, the perpendicular force Qo' has a clockwise component as seen in FIG. 5, which constitutes the rotational urging moment providing the torsion spring capability. It is noted here that unlike the curvature center Ci of the inner raceway surface in FIG. 4, the curvature center Ci1 of the inner rolling surface 2k1 in FIG. 5 (the above-described inner rolling surface 2k1 primarily belonging to the region A1) is deviated a distance h from the shaft center X in the direction of the second straight line y1.
Because of the deviation by the distance h, the vector of the perpendicular force Qo' is directed more horizontally as compared with the case of FIG. 4. In other words, a length of a perpendicular dropped from the shaft center X to the straight line L1 is equivalent to a length of a moment arm perpendicular to the direction of the above perpendicular force Qo'. The moment arm in FIG. 5 has a greater length U2 than the length U1 of the moment arm in FIG. 4.
Therefore, the rotational urging moment [(magnitude of perpendicular force Qo')×(length U2)] of FIG. 5 is greater than the rotational urging moment [(magnitude of perpendicular force Qo')×(length U1)] of FIG. 3, provided that the perpendicular force Qo' is of the same magnitude. Thus, the constitution of FIG. 5 is capable of more efficiently generating the rotational urging force to the external force (torque) than the constitution of FIG. 3.
Specifically, the above constitution is capable of properly regulating balance between the rotational urging force and the damping function by decreasing the ratio of the perpendicular force Qo' for increasing the rotational urging force, thereby efficiently generating the rotational urging force.

The pulley assembly 1 of the embodiment constituted as described above is capable of more effectively reducing the rotational velocity variation because the assembly can efficiently generate the rotational urging force to the external force.
As described above, the pulley assembly 1 of the embodiment restricts the relative rotation between the pulley boss 2 and the pulley member 3 to only one direction. In addition, the rotational urging force acting in the direction to eliminate the phase difference caused by the relative rotation between the pulley boss 2 and the pulley member 3 develops only in the clockwise direction as seen in FIG. 4 but not in the counterclockwise direction regardless of the phase relation therebetween.
On the other hand, the torque from the crankshaft of the engine rotated in only one direction is transmitted to the alternator to which the pulley assembly 1 is mounted. Hence, the alternator may employ even the pulley assembly operative to generate the rotational urging force when the pulley boss and the pulley member are rotated relative to each other only in one direction.

Next, description is made on the results of a test which the present inventors have conducted on the alternator pulley assembly of the invention to verify its performance of reducing the rotational velocity variation.

The alternator pulley assembly shown in FIG. 1 and FIG. 2 was subjected to this test. The pulley boss, pulley member and cylindrical roller were manufactured using a steel material having a Young's modulus of 207900 MPa and a Poisson's ratio of 0.3 and according to the following specifications.

| | |
|---|---|
| Inner-race gauge radius Ri: | 13.5 mm |
| Outer-race gauge radius Ro: | 20 mm |
| Roller radius Rr (FIG. 2) : | 3.25 mm |
| Effective roller length : | 10 mm |
| Mean race diameter : | 33.5 mm |
| Radial clearance : | 0 mm |
| Curvature radius gri of inner deformed raceway surface 2k: | 15.2 mm |
| Curvature radius gro of outer deformed raceway surface 3k: | 18 mm |

The following method was adopted for evaluating the above pulley assembly for its performance of reducing the rotational velocity variation. Specifically, the above pulley assembly was mounted to a shaft having an equal mass to that of the alternator and rotatably supported. The belt was trained about the pulley member as the input side, which was rotated in a manner that the rotational velocity thereof was varied over time with predetermined amplitude and frequency.
In the meantime, measurement was taken on the moment-to-moment change of the rotational velocity of the shaft (pulley boss) rotated in conjunction with the rotation of the pulley member. The performance of reducing the rotational velocity variation was evaluated by keeping track of the amplitude of the rotational velocity of the shaft. The rotational velocities of the pulley member and the shaft were measured in terms of peripheral velocity based on the same diameter.
As a test condition, the operation of the pulley member as the input side was set such that the rotational velocity thereof was periodically varied with the amplitude of 320 to 370 m/min (peripheral velocity).

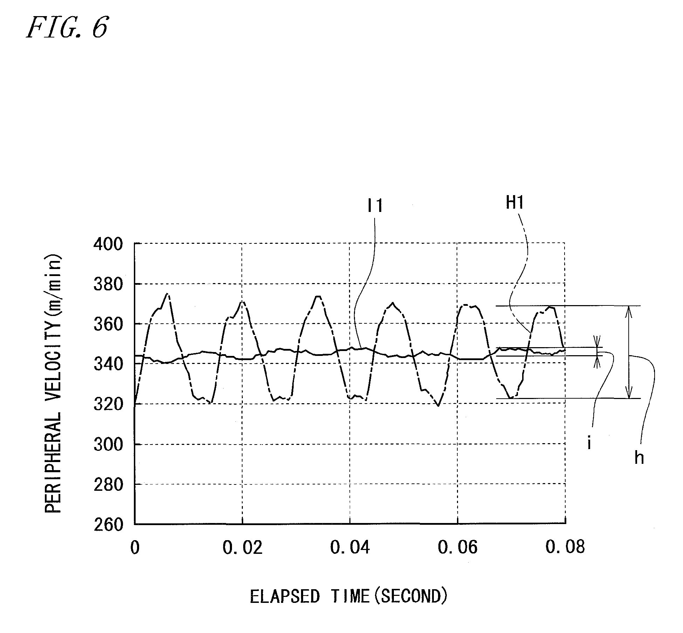

FIG. 6 is a graphical representation of an example of the measurements taken on the moment-to-moment change of rotational velocity of the pulley member and on the moment-to-moment change of rotational velocity of the shaft. In the graph, the ordinate is the rotational velocity and the abscissa is the elapsed time. A waveform H1 represents the moment-to-moment change of rotational velocity of the pulley member. A waveform 11 represents the moment-to-moment change of rotational velocity of the shaft.
The waveform H1 shows that the rotational velocity periodically varies with the amplitude of 320 to 370 m/min (peripheral velocity). As apparent from comparison between the waveform H1 and the waveform I1, the amplitude i of the waveform I representing the rotational velocity of the shaft is much smaller than the amplitude h of the waveform H representing the rotational velocity of the pulley member. This indicates that the rotational velocity variation of the pulley member is reduced.

As to the amplitude h and amplitude i obtained as shown in FIG. 6, the operation of the pulley member was set such that the frequencies in the periodical variation of rotational velocity thereof were in the range of 30 to 70 Hz. Measurement was taken on the amplitude of the rotational velocity of the shaft at each frequency.

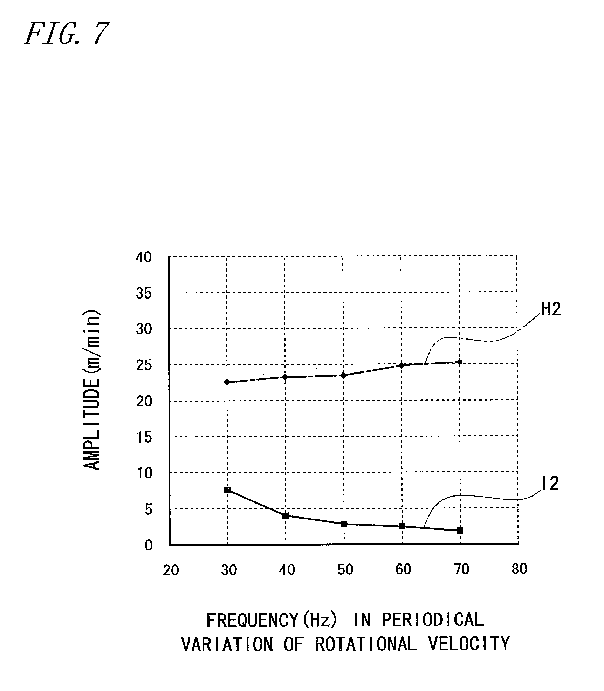

FIG. 7 is a graph plotting the amplitude h and the amplitude i at each frequency determined as described above. In the graph, the ordinate is the amplitude of the rotational velocity and the abscissa is the frequency in the periodical variation of the rotational velocity of the pulley member. A line plot H2 and a line plot I2 represent the measurement results of the pulley member and the shaft, respectively. Comparison between these line plots H2, 12 shows that the amplitude of the shaft as determined at each frequency is much smaller than that of the pulley member.

It is confirmed from the above test results that the alternator pulley assembly according to the invention is capable of dramatically reducing the amplitude associated with the rotational velocity variation transmitted to the pulley member and of transmitting the resultant rotational velocity variation to the shaft (pulley boss), thus achieving the effective reduction of rotational velocity variation. That is, the pulley assembly having the aforementioned characteristics may be used for the engine alternator thereby to reduce the rotational velocity variation of the crankshaft effectively.

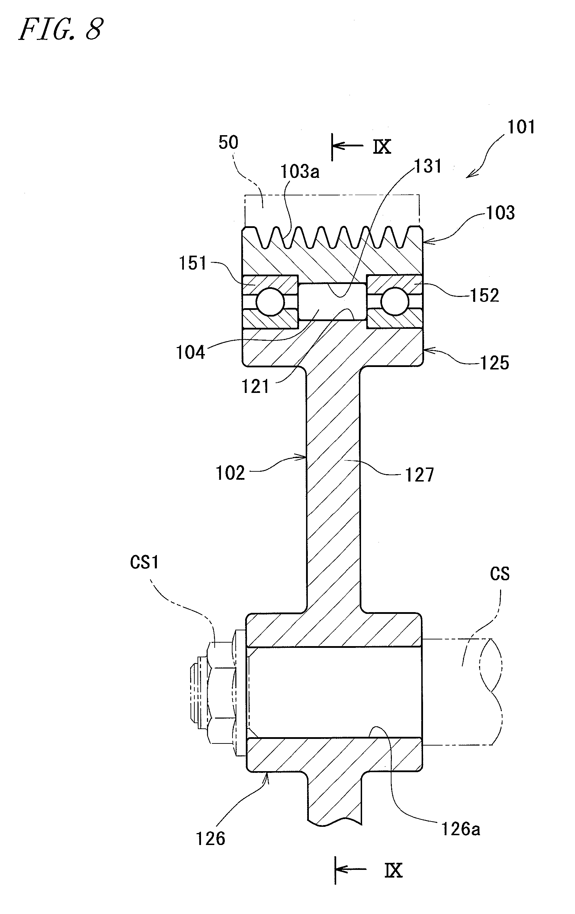

FIG. 8 is a sectional view showing an essential part of a crankshaft pulley assembly according to a third embodiment of the invention. The crankshaft pulley assembly 101 is mounted to an engine crankshaft of a motor vehicle. The pulley assembly has a belt trained thereabout for drivingly transmitting a torque from the crankshaft to the auxiliaries such as an alternator.

The crankshaft pulley assembly 101 includes: an inside member 102 unitarily rotatably mounted to an engine crankshaft CS; a pulley member 103 as a cylindrical outside member coaxially disposed on an outer peripheral side of the inside member 102; a cylindrical roller 104 as a rolling element rollably interposed between these members; and two rolling bearings 151, 152 interposed between the inside member 102 and the pulley member 103 as located on axially opposite sides of the cylindrical roller 104.
The pulley member 103 is formed with a corrugated groove 103a on an outer periphery thereof such that the belt 50 for transmitting the torque from the engine crankshaft to the auxiliaries may be trained about the pulley member. The pulley member 103 is further formed with an outer raceway surface 131 on an inner periphery thereof such that the cylindrical rollers 104 may roll on it.
The inside member 102 includes: a boss portion 126 formed with a through-hole 126a in which the crankshaft CS is inserted; an annular portion 125 having an outer periphery in coaxial relation with the through-hole 126a; and a plurality of spoke members 127 radially extended from the boss portion 126 to support the annular portion 125.
The inside member 102 is unitarily rotatably mounted to an end of the crankshaft CS by inserting the crankshaft CS into the through-hole 126a and fixing the inside member to the crankshaft with a bolt CS 1. The annular portion 125 is formed with an inner raceway surface 121 on the outer periphery thereof. The inner raceway surface permits the cylindrical rollers 104 to roll thereon and opposes the outer raceway surface 131.
The rolling bearings 151, 152 are interposed between the inside member 102 and the pulley member 103 thereby permitting these members to rotate relative to each other and bearing the radial load exerted on the pulley member 103.

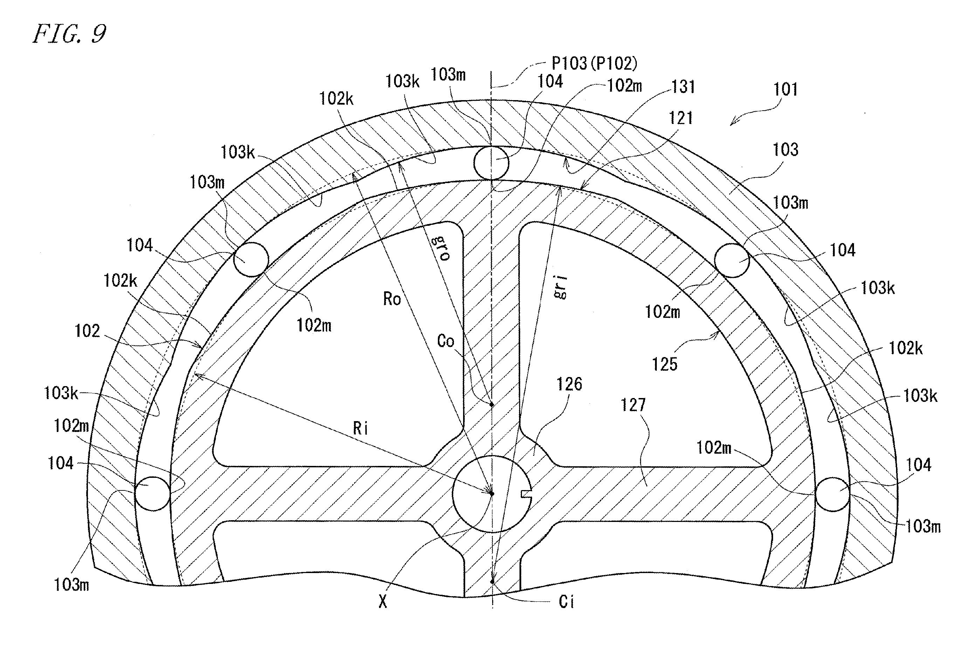

Next, description is made on the inner raceway surface 121 and the outer raceway surface 131 provided on the inside member 102 and the pulley member 103, respectively. FIG. 9 is a sectional view taken on the line IX-IX in FIG. 8. The inner raceway surface 121 of the annular portion 125 (inside member 102) is constructed by continuously forming inner deformed raceway surfaces 102k as a plurality of deformed raceway surfaces each defined by a circumferential surface deformed from a circumferential surface about a rotation axis X of the inside member 102 and pulley member 103. The outer raceway surface 131 is constructed by continuously forming outer deformed raceway surfaces 103k as a plurality of deformed raceway surfaces.

All the inner deformed raceway surfaces 102k constituting the inner raceway surface 121 are of the same configuration, and all the outer deformed raceway surfaces 103k constituting the outer raceway surface 131 are also of the same configuration. The inner raceway surface 121 is equally divided into eight circumferential segments (at 45° angular space intervals), each of which defines the inner deformed raceway surface 102k.
Similarly, the outer raceway surface 131 is also equally divided into eight circumferential segments (at 45° angular space intervals), each of which defines the outer deformed raceway surface 103k. One cylindrical roller 104 is disposed between a respective pair of deformed raceway surfaces 102k, 103k.
The inner deformed raceway surface 102k and the outer deformed raceway surface 103k define a diminishing space (wedge-shaped space) between the inside member 102 and the pulley member 103, the diminishing space progressively decreased in race-to-race distance in the circumferential direction. In conjunction with the relative rotation between the inside member 102 and the pulley member 103, the so-called wedge effect occurs to subject the cylindrical roller 104 to the elastic compressive deformation.
As described above, the inner raceway surface 121 and the outer raceway surface 131 are individually constructed by continuously forming the deformed raceway surfaces 102k, 103k so that the inner raceway surface 121 and the outer raceway surface 131 consist solely of the deformed raceway surfaces 102k, 103k, respectively. What is more, the deformed raceway surfaces 102k, 103k are circumferentially arranged with equal spacing.

Next, a detailed description is made on contour shapes of the outer deformed raceway surface 103k and the inner deformed raceway surface 102k.
The plurality of outer deformed raceway surfaces 103k constituting the outer raceway surface 131 are each formed in a concave curve. Specifically, the outer deformed raceway surface 103k is defined by a circumferential surface about a center of outer race curvature Co located closer to the raceway surface (the outer deformed raceway surface 103k of interest) than to the rotation axis X of the inside member 102 and pulley member 103 (hereinafter, also referred to as "shaft center X").
A curvature radius gro of this outer deformed raceway surface 103k is the maximum distance between the outer raceway surface 131 and the shaft center X and is smaller than an outer-race gauge radius Ro representing a radius of a circle circumscribed with a contour of a cross section of the outer raceway surface 131. As seen in the section, the outer-race curvature center Co with respect to each of three outer deformed raceway surfaces 103k is located on a straight line p103 including an outer-race maximum radius point 103m and the shaft center X, the outer-race maximum radius point 103m defining the maximum distance from the shaft center X.

The plurality of inner deformed raceway surfaces 102k constituting the inner raceway surface 121 are each formed in a convex curve. Specifically, the inner deformed raceway surface 102k is defined by a circumferential surface about a center of inner race curvature Ci located farther from the raceway surface (the inner deformed raceway surface 102k of interest) than from the shaft center X.
A curvature radius gri of this inner deformed raceway surface 102K is the minimum distance between the inner raceway surface 121 and the shaft center X and is greater than an inner-race gauge radius Ri representing a radius of a circle inscribed in a contour of a cross section of the inner raceway surface 121. As seen in the section, the inner-race curvature center Ci with respect to each of three inner deformed raceway surfaces 102k is located on a straight line p102 including an inner-race minimum radius point 102m and the shaft center X, the inner-race minimum radius point 102m defining the minimum distance from the shaft center X.

The crankshaft pulley assembly 101 including the inner raceway surface 121 and outer raceway surface 131, having the above-described configurations, has the rotational urging function (torsion spring function). The following description is made on this regard.
Since the inner raceway surface 121 and the outer raceway surface 131 are not defined by the circumferential surfaces about the shaft center X, as described above, the configuration of the space (roller rolling space) defined between the inner raceway surface 121 and the outer raceway surface 131 varies according to a relative phase relation between the inside member 102 and the pulley member 103.
FIG. 9 shows a state where the outer-race maximum radius point 103m of the outer raceway surface 131 is in phase with the inner-race minimum radius point 102m of the inner raceway surface 121. Hereinafter, this state will be referred to as "reference state". In this reference state, each of the cylindrical rollers 104 is located at a circumferential position to make contact with the inner-race minimum radius point 102m and the outer-race maximum radius point 103m.
This reference state provides the widest clamping gap for the cylindrical roller 104 (race-to-race distance as determined at the contact position of the cylindrical roller 104) which is defined by the outer deformed raceway surface 103k and the inner deformed raceway surface 102k. In this reference state, therefore, the compressive force exerted on the cylindrical roller 104 by these raceway surfaces 102k, 103k is at the minimum value (e.g., 0).
The reference state is designed such that a radial distance between the inner-race minimum radius point 102m and the outer-race maximum radius point 103m is substantially equal to a diameter of the cylindrical roller 104. However, a minor radial clearance (plus clearance or minus clearance) may also be provided.

Subsequently when the inside member 102 and the pulley member 103 are rotated relative to each other from the reference state, the cylindrical rollers 104 are rolled while the clamping gaps for the cylindrical rollers 104 are progressively narrowed. In conjunction with the relative rotation, therefore, the cylindrical rollers 104 undergo the elastic compressive deformation as compressed by the inner raceway surface 121 and the outer raceway surface 131. Hence, the cylindrical rollers 104 impart the rotational urging force (elastic force: torsion spring force) between the inside member 102 and the pulley member 103 in the direction to eliminate the phase difference caused by the relative rotation.
The relations between the above inner raceway surface 121, outer raceway surface 131 and cylindrical rollers 104 are the same as those between the inner raceway surface 21, outer raceway surface 31 and cylindrical rollers 4 of the first embodiment and a mechanism of generating the rotational urging force imparted between the inside member 102 and the pulley member 103 is the same as that described in the first embodiment shown in FIG. 3. Hence, a detailed description thereof is dispensed with.

The crankshaft pulley assembly 101 of the above-described constitution is adapted to impart the rotational urging function (torsion spring capability) by means of the simple structure without the torsion coil spring or the like. That is, this torsion spring capability elastically permits the pulley member 103 and the inside member 102 to rotate relative to each other in the circumferential directions. This permits the pulley member 103 to function as a damper mass for the crankshaft such as to reduce the vibrations of the crankshaft and the rotational velocity variation thereof.
The characteristic of the torsion spring capability provided by the above-described constitution may be altered in various ways by changing the configurations of the deformed raceway surfaces 102k, 103k, the outside diameter of the cylindrical roller 104 or the like. This leads to an extremely high degree of freedom of defining the characteristic. It is therefore possible to impart a favorable elastic force characteristic to the crankshaft pulley assembly 101 according to the specifications or characteristics of the engine or the like. Hence, the pulley assembly is capable of more effectively reducing the vibrations and rotational velocity variation of the crankshaft.

As described above, the crankshaft pulley assembly 101 is capable of effectively reducing the vibrations and rotational velocity variation of the crankshaft and hence, the slippage between the belt 50 and the pulley assembly can be more effectively suppressed as compared with a case where the conventional pulley assembly is employed. Accordingly, the initial tension of the belt 50 may be set to a lower value than that of the conventional pulley assembly whereby the load on the crankshaft is reduced and the engine is improved in the mileage performance.

In a case where a roller rolling region between the cylindrical roller 104 and the inner raceway surface 121 and outer raceway surface 131 is lubricated with a lubricant such as oil or grease, viscous rolling resistance and agitating resistance of the lubricant associated with the rolling motion of the cylindrical rollers 104 can impart a damping function to the pulley assembly 101 of the above embodiment.
The pulley assembly attains both the torsion spring capability and the damping function to damp an exerted external force and the rotational urging force as a reaction force to the external force. Thus, the crankshaft pulley assembly 101 of the embodiment is adapted to damp and reduce resonance or the like induced by the torsion spring capability.

In this crankshaft pulley assembly 101, the rolling bearings 151, 152 are interposed between the inside member 102 and the pulley member 103 so that these bearings may bear the radial load exerted on the pulley member 103. Thus is reduced the external load exerted on these deformed raceway surfaces 102k, 103k and the cylindrical rollers 104 and hence, a load required for generating the rotational urging force can be stably exerted on these deformed raceway surfaces 102k, 103k and cylindrical rollers 104. Thus, the crankshaft pulley assembly 101 is adapted to provide a more stable rotational urging force.
As compared with the conventional pulley assembly using a damper rubber or the like formed from an elastic material, the pulley assembly 101 of the embodiment can suppress deterioration resulting from continuous operation or change in characteristics with time. Hence, the pulley assembly can achieve the extended service life and the increased reliability.

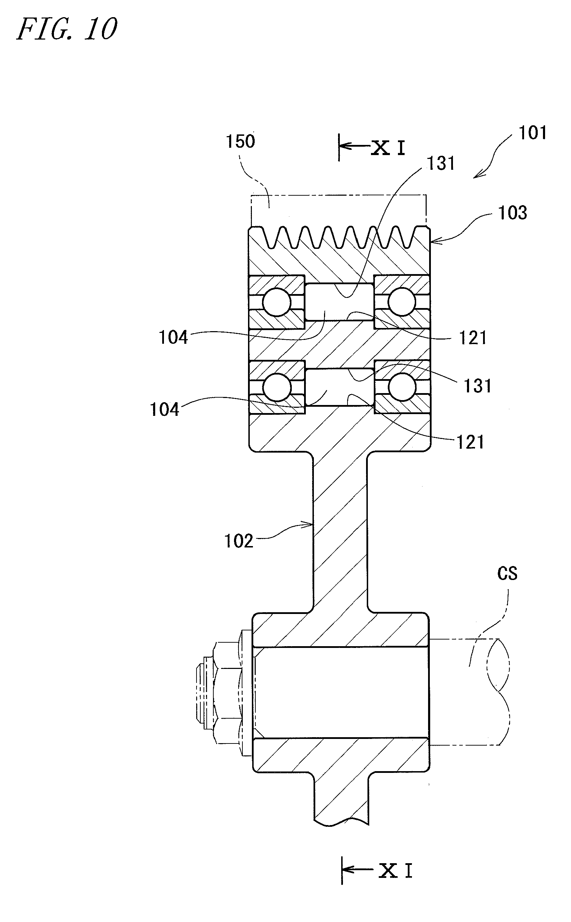

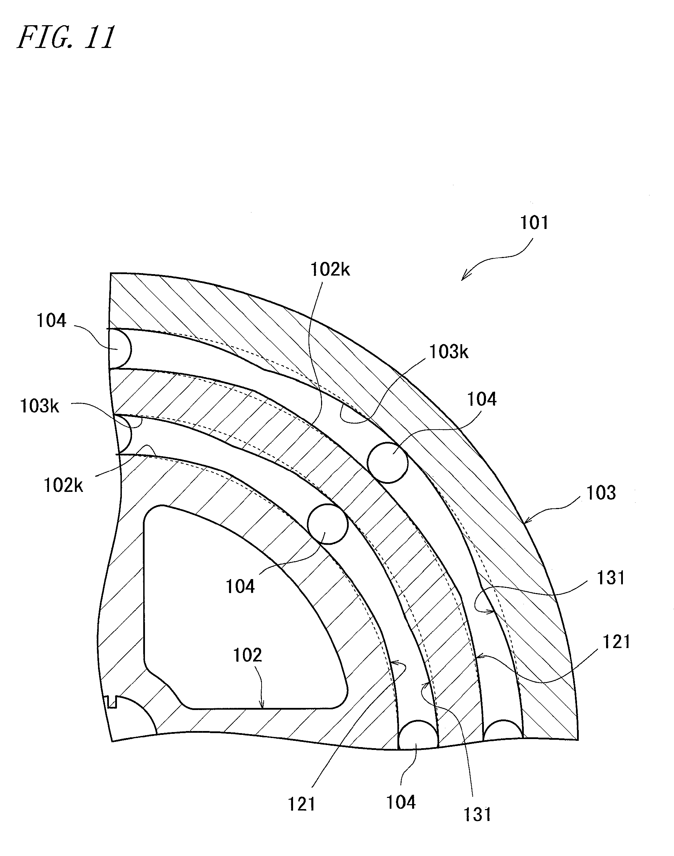

In an alternative constitution, the inner raceway surfaces 121 formed with the inner deformed raceway surfaces 102k, the outer raceway surfaces 131 formed with the outer deformed raceway surfaces 103k and the cylindrical rollers 104 may be radially arranged in respective double rows, as shown in FIG. 10 and FIG. 11. In this case, the pulley assembly is decreased in torsional rigidity and is increased in allowable rotational angle. Hence, the pulley assembly can achieve a greater effect to reduce the vibrations and rotational velocity variation of the crankshaft.

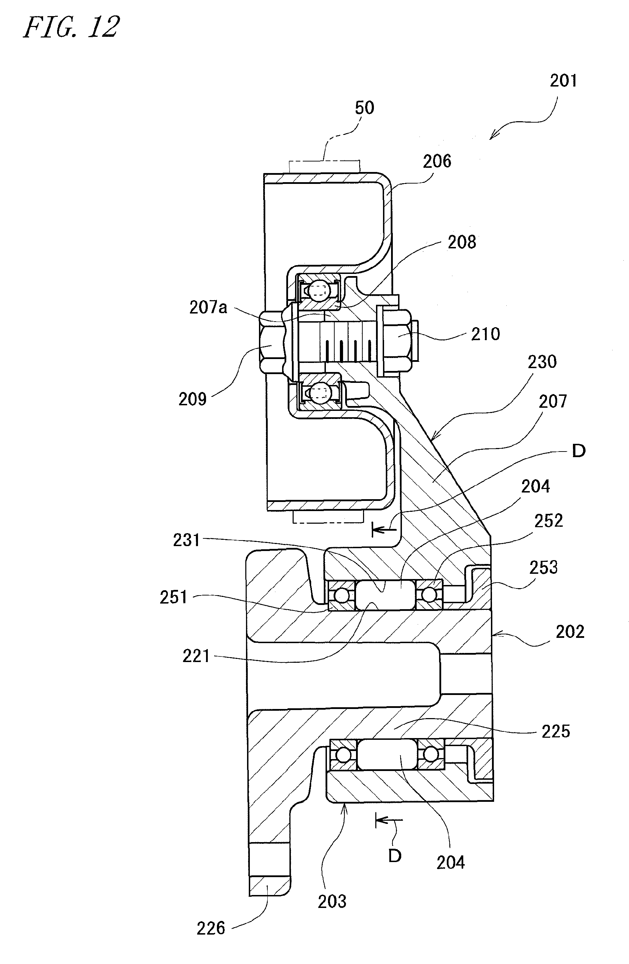

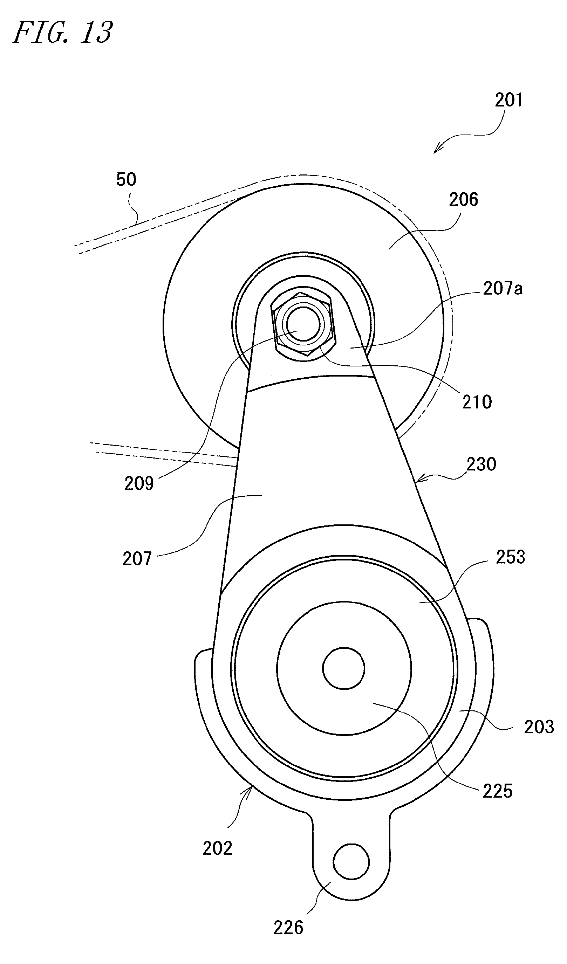

FIG. 12 and FIG. 13 are a sectional view and a side view showing an auto tensioner according to a fourth embodiment of the invention. Referring to FIG. 12, a swing arm 230 is a molded member including a substantially cylindrical base end portion 203 and an arm 207 which are formed in one piece. The arm 207 is extended from the base end portion 203 and has a pulley 206 fixed thereto, the pulley having the belt 50 trained thereabout. The pulley 206 is centrally mounted with a ball bearing 208. An inner ring of the ball bearing 208 is fitted about a distal end 207a of the arm 207 and fixed thereto by means of a bolt 209 and a nut 210. In this manner, the pulley 206 is rotatably fixed to the distal end 207a of the arm 207.

On the other hand, a support member 202 supporting the swing arm 230 is a molded member including: a shaft portion 225 formed in a hollow shaft; and a fixing portion 226 for fixing the shaft portion to the engine to which the auto tensioner 201 is mounted. The shaft portion 225 is coaxially disposed in an inner periphery of the base end portion 203. A cylindrical roller 204 as a rolling element is rollably interposed between the shaft portion 225 and the base end portion 203. An outer raceway surface 231 for the cylindrical rollers 204 to roll thereon is formed on the inner periphery of the base end portion 203. An inner raceway surface 221 for the cylindrical rollers 204 to roll thereon is formed on an outer periphery of the shaft portion 225 and opposes the outer raceway surface 231.

Rolling bearings 251, 252 are interposed between the base end portion 203 and the shaft portion 225 as located on axially opposite sides of the cylindrical roller 204. The rolling bearings permit the base end portion 203 and the shaft portion 225 to rotate relative to each other and bear the radial load exerted on the base end portion 203. A stopper member 253 is press inserted and fitted on an end of the shaft portion 225 for fixing the cylindrical rollers 204 and the rolling bearings 251, 252 so as to prevent the rollers and bearings from disengaging from the shaft portion.

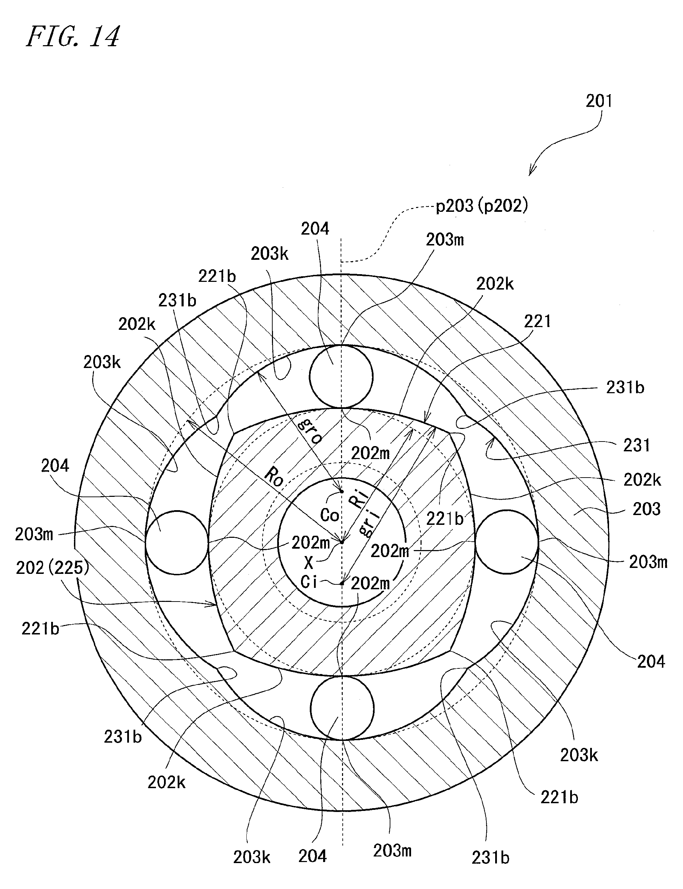

Next, description is made on the inner raceway surface 221 and the outer raceway surface 231 formed on the shaft portion 225 and the base end portion 203, respectively. FIG. 14 is an enlarged view of a cross section taken on the line D-D in FIG. 12. The inner raceway surface 221 of the shaft portion 225 is constructed by continuously forming four inner deformed raceway surfaces 202k as four deformed raceway surfaces each defined by a circumferential surface deformed from a circumferential surface about the rotation axis X of the shaft portion 225 and base end portion 203. The outer raceway surface 231 is constructed by continuously forming four outer deformed raceway surfaces 203k as four deformed raceway surfaces.
All the inner deformed raceway surfaces 202k constituting the inner raceway surface 221 are of the same configuration, and all the outer deformed raceway surfaces 203k constituting the outer raceway surface 231 are also of the same configuration. The inner raceway surface 221 is equally divided into four circumferential segments (at 90° angular space intervals), each of which defines the inner deformed raceway surface 202k.
Similarly, the outer raceway surface 231 is also equally divided into four circumferential segments (at 90° angular space intervals), each of which defines the outer deformed raceway surface 203k. One cylindrical roller 204 is disposed between a respective pair of deformed raceway surfaces 202k, 203k.
The inner deformed raceway surface 202k and the outer deformed raceway surface 203k define a diminishing space (wedge-shaped space) between the shaft portion 225 and the base end portion 203, the diminishing space progressively decreased in race-to-race distance in the circumferential direction. In conjunction with the relative rotation between the shaft portion 225 and the base end portion 203, the so-called wedge effect occurs to subject the cylindrical roller 204 to elastic compressive deformation.
As described above, the inner raceway surface 221 and the outer raceway surface 231 are individually constructed by continuously forming the deformed raceway surfaces 202k, 203k, so that the inner raceway surface 221 and the outer raceway surface 231 consist solely of the deformed raceway surfaces 202k, 203k, respectively. What is more, the deformed raceway surfaces 202k, 203k are circumferentially arranged with equal spacing.

Next, a detailed description is made on contour shapes of the outer deformed raceway surface 203k and the inner deformed raceway surface 202k.
The four outer deformed raceway surfaces 203k constituting the outer raceway surface 231 are each formed in a concave curve. Specifically, the outer deformed raceway surface 203k is defined by a circumferential surface about a center of outer race curvature Co located closer to the raceway surface (the outer deformed raceway surface 203k of interest) than to a rotation axis X of the shaft portion 225 and base end portion 203 (hereinafter, also referred to as "shaft center X").
A curvature radius gro of this outer deformed raceway surface 203k is the maximum distance between the outer raceway surface 231 and the shaft center X, and is smaller than an outer-race gauge radius Ro representing a radius of a circle circumscribed with a contour of a cross section of the outer raceway surface 231. As seen in the section, the outer-race curvature center Co with respect to each of three outer deformed raceway surfaces 203k is located on a straight line p203 including an outer-race maximum radius point 203m and the shaft center X, the outer-race maximum radius point 203m defining the maximum distance from the shaft center X.

The four inner deformed raceway surfaces 202k constituting the inner raceway surface 221 are each formed in a convex curve. Specifically, the inner deformed raceway surface 202k is defined by a circumferential surface about a center of inner race curvature Ci located farther from the raceway surface (the inner deformed raceway surface 202k of interest) than from the shaft center X. A curvature radius gri of this inner deformed raceway surface 202k is the minimum distance between the inner raceway surface 221 and the shaft center X, and is greater than an inner-race gauge radius Ri representing a radius of a circle inscribed in a contour of a cross section of the inner raceway surface 221.
As seen in the section, the inner-race curvature center Ci with respect to each of three inner deformed raceway surfaces 202k is located on a straight line p202 including an inner-race minimum radius point 202m and the shaft center X, the inner-race minimum radius point 202m defining the minimum distance from the shaft center X.

When rotated relative to each other, the shaft portion 225 and the base end portion 203 individually formed with the raceway surfaces 221, 231 of the above-described configurations exhibit the rotational urging function (torsion spring function) in the direction to eliminate the phase difference caused by the relative rotation. The following description is made on this regard.
Since the inner raceway surface 221 and the outer raceway surface 231 are not defined by the circumferential surfaces about the shaft center X as described above, the configuration of a space (roller rolling space) defined between the inner raceway surface 221 and the outer raceway surface 231 varies according to a relative phase relation between the shaft portion 225 and the base end portion 203. FIG. 14 shows a state where the outer-race maximum radius point 203m of the outer raceway surface 231 is in phase with the inner-race minimum radius point 202m of the inner raceway surface 221.
Hereinafter, this state will be referred to as "reference state". In this reference state, each of the cylindrical rollers 204 is located at a circumferential position to make contact with the inner-race minimum radius point 202m and the outer-race maximum radius point 203m. This reference state provides the widest clamping gap for the cylindrical roller 204 (race-to-race distance as determined at the contact position of the cylindrical roller 204) which is defined by the outer deformed raceway surface 203k and the inner deformed raceway surface 202k. In this reference state, therefore, the compressive force exerted on the cylindrical roller 204 by these raceway surfaces 202k, 203k is at the minimum value (e.g., 0).
The reference state is designed such that a radial distance between the inner-race minimum radius point 202m and the outer-race maximum radius point 203m is substantially equal to a diameter of the cylindrical roller 204. However, a minor radial clearance (plus clearance or minus clearance) may also be provided.

Subsequently when the shaft portion 225 and the base end portion 203 are rotated relative to each other from the reference state, the cylindrical rollers 204 are rolled while the clamping gaps for the cylindrical rollers 204 are progressively narrowed. In conjunction with the relative rotation, therefore, the cylindrical rollers 204 undergo the elastic compressive deformation as compressed by the inner raceway surface 221 and the outer raceway surface 231. Hence, the cylindrical rollers 204 impart the rotational urging force (elastic force: torsion spring force) between the shaft portion 225 and the base end portion 203 in the direction to eliminate the phase difference caused by the relative rotation.
The relations between the above inner raceway surface 221, outer raceway surface 231 and cylindrical rollers 204 are the same as those between the inner raceway surface 21, outer raceway surface 31 and cylindrical rollers 4 of the first embodiment and a mechanism of generating the rotational urging force imparted between the inside member 202 and the base end portion 203 is the same as that described in the first embodiment shown in FIG. 3. Hence, a detailed description thereof is dispensed with.

The shaft portion 225 relatively rotatably supports the base end portion 203 in the aforementioned manner so that the swing arm 230 is swingable relative to the support member 202. The auto tensioner 201 uses the above-described rotational urging force for urging the swing arm 230 with the belt 50 trained about the pulley 206 in the clockwise direction as seen in FIG. 13, thereby imparting a certain tension to the belt 50.

The auto tensioner 201 of the above-described constitution is adapted to impart the rotational urging function (torsion spring capability) between the shaft portion 225 (shaft support member 202) and the base end portion 203 by means of the simple structure without the torsion coil spring or the like. That is, this torsion spring capability elastically permits the swing arm 230 to swing about the shaft portion 225 thereby imparting the tension to the belt 50.
The characteristic of the torsion spring capability provided by the above-described constitution may be altered in various ways by changing the configurations of the deformed raceway surfaces 202k, 203k, the outside diameter of the cylindrical roller 204 or the like. This leads to an extremely high degree of freedom of defining the characteristic. It is therefore possible to define a favorable elastic force characteristic for swinging movement of the swing arm 230 according to the characteristics, specifications or the like of the engine. Hence, the auto tensioner is capable of more effectively accommodating the tension variation of the belt 50.

In a case where a roller rolling region between the cylindrical roller 204 and the inner raceway surface 221 and outer raceway surface 231 is lubricated with a lubricant such as oil or grease, viscous rolling resistance and agitating resistance of the lubricant associated with the rolling motion of the cylindrical rollers 204 can impart the damping function to the auto tensioner 201 of the above embodiment. The auto tensioner attains both the torsion spring capability and the damping function to damp the exerted external force and the rotational urging force as the reaction force to the external force. Thus, the auto tensioner 201 of the embodiment is adapted to damp and reduce resonance or the like induced by the torsion spring capability.

In this auto tensioner 201, the rolling bearings 251, 252 are interposed between the shaft portion 225 and the base end portion 203 and bear the radial load exerted between the shaft portion 225 and the base end portion 203. Thus is reduced the external load exerted on these deformed raceway surfaces 202k, 203k and the cylindrical rollers 204 and hence, a load required for generating the rotational urging force can be stably exerted on these deformed raceway surfaces 202k, 203k and the cylindrical rollers 204. Accordingly, the auto tensioner 201 can provide a more stable rotational urging force.

As compared with the conventional auto tensioner using the torsion coil spring, the auto tensioner of the embodiment can suppress deterioration resulting from continuous operation or change in characteristics with time, achieving the extended service life. Furthermore, a peripheral structure of the pulley assembly is simplified so that the pulley assembly can achieve the reduction of the number of parts, the reduced assembly cost, the increased reliability, and the size reduction thereof.

The pulley assembly and the auto tensioner of the invention are not limited to the foregoing embodiments. While the alternator pulley assembly, the crankshaft pulley assembly and the auto tensioner illustrated by the above embodiments employ the cylindrical roller as the rolling element, balls, tapered rollers and the like, for example, are also usable. The configuration and the like of the rolling element are not particularly limited so long as the rolling element is capable of being rolled in conjunction with the relative rotation between the inner and outer raceway surfaces.
Further, a hollow rolling element or the like (such as a hollow cylindrical roller or a hollow ball) prone to elastic compressive deformation may also be employed for increasing the freedom of defining the torsional rigidity. A suitable material of the rolling element may be selected according to the performance required of each pulley assembly.
In the alternator pulley assembly and the crankshaft pulley assembly of the foregoing embodiments, the outer raceway surface is formed directly on the inner periphery of the cylindrical pulley member. Alternatively, the outer raceway surface may also be provided on the inner periphery of the pulley member by fitting an outer ring, having the outer raceway surface formed on its inner periphery, in the inner periphery of the pulley member. Likewise, the inside member (pulley boss) or the cylindrical base end portion or shaft portion of the auto tensioner of the above embodiments may also be provided with the raceway surface by fitting an inner (outer) ring formed with each raceway surface.

The pulley member of the crankshaft pulley assembly of the invention may also be adjusted in the overall weight thereof by adjusting the configuration or thickness thereof. Thus the pulley member has an increased effect as the damper mass of the pulley assembly so that the pulley assembly is further increased in the effect to reduce the vibrations or rotational velocity variation of the crankshaft.
While the fourth embodiment illustrates the auto tensioner, the swing arm 230 of which includes the base end portion 203 and the arm 207 formed in one piece, the swing arm may also be constructed by forming the base end portion 203 and the arm 207 as separate members and integrally fixing these members.

The following description is made on the invention related to an urging device exhibiting spring elasticity in a linear action direction (compressing direction or tensioning direction).

An urging device employing a coil spring (such as a compression spring or extension spring) or an elastic member (such as rubber) is widely used as the urging device exhibiting the spring elasticity in the compressing direction or tensioning direction. The urging device employing the coil spring, for example, is elastically deformed to an axial displacement thereof and imparts an urging force to the external in a direction to eliminate this displacement. Such an urging device is used in various applications requiring the spring elasticity as assembled in, for example, a spring-type elastic shaft coupling such as disclosed in Japanese Unexamined Patent Publication No.H7(1995)-224850.

Unfortunately, however, the conventional urging device employing the coil spring has various problems.
A first problem is that the conventional urging devices are prone to deterioration due to continuous operation or change in characteristics with time, suffering a shortened service life.
A second problem is that the above-described conventional urging devices suffer a low design freedom. To change the spring rigidity, for example, the number of windings, winding diameter or the like of the coil spring is varied in the case of the urging device employing the coil spring, or the material or thickness of the elastic member is varied in the case of the urging device employing the elastic member such as rubber.
However, the range of spring rigidity design allowed by such variations is limited. Consequently, the conventional urging devices of the same size (constitution) have quite a limited range of spring rigidity. In addition, the conventional urging devices have a linear relation between the displacement and the spring constant. This makes it impossible to vary the spring constant freely according to the displacement such as to vary the spring constant in nonlinear relation to the displacement.
A third problem is as follows. The conventional urging device requires joints for connecting urging members such as coil springs with first and second members which are moved relative to each other. This results in a complicated peripheral structure which involves the increased number of parts and assembly cost as well as lowered reliability.
A fourth problem is as follows. As described above, the conventional urging device tends to suffer the low degree of design freedom and the complicated peripheral structure. Hence, the conventional urging device tends to be increased in size (constitution) and suffers a limit to size reduction.

As described above, the urging device employing the coil spring or the like has the various problems. In contrast, an urging device of the invention is a member featuring a novel construction designed based on a technical concept entirely different from the prior-art concept and thence, is capable of overcoming the above problems.
Namely, the invention seeks to provide an epoch-making urging device solving the various problems encountered by the conventional urging devices such as the coil spring.

An urging device according to the invention comprises: a first member including a first raceway surface; a second member including a second raceway surface opposing the first raceway surface and linearly movable relative to the first member; and a rolling element rollably interposed between the first raceway surface and the second raceway surface, wherein at least one of the first raceway surface and the second raceway surface is at least partially formed with a deformed raceway surface which, in conjunction with the relative linear movement of the first raceway surface and the second raceway surface, progressively narrows a clamping gap for the rolling element as allowing the rolling movement of the rolling element and imparts an urging force between the first member and the second member in a direction to eliminate relative displacement between these members, the relative displacement resulting from the relative linear movement.

Such a constitution is adapted to impart an urging function (hereinafter, also referred to as "spring capability") without using a coil spring or the like. Further, the rolling bearing can bear load exerted between the first member and the second member. In addition, the urging device is dramatically increased in the degree of design freedom because the design of the deformed raceway surface affords freedom of designing the spring rigidity and the like.

In the above urging device, the deformed raceway surface may have a configuration wherein a cross section in a direction of the relative linear movement defines a concave curve. Such a constitution permits the rolling element to make a more smooth rolling contact movement in conjunction with the above relative linear movement. Further, it is easier to decrease the change rate of the rolling-element clamping gap which is progressively narrowed in conjunction with the relative linear movement between the first member and the second member. This makes it easy to provide the spring capability in a wider range of relative displacement.

The urging device may also have a constitution which comprises: the first member including a tubular outside portion and the first raceway surface defined by an inside surface of the outside portion; the second member including an inside portion disposed internally of the outside portion in coaxial relation thereto and the second raceway surface defined by an outside surface of the inside portion; and the deformed raceway surface formed on at least one of the inside surface of the outside portion and the outside surface of the inside portion, wherein the first raceway surfaces, the second raceway surfaces and the rolling elements are arranged about the axis with equal spacing, respectively, and wherein the outside portion and the inside portion are linearly movable relative to each other in the axial direction as maintaining the coaxial relation.
In this constitution, the rolling elements are interposed between the tubular outside portion and the inside portion disposed internally thereof. Hence, the constitution wherein the rolling-element clamping gaps are progressively narrowed by the relative linear movement of the first member and the second member in the axial direction can be easily embodied by forming the deformed raceway surfaces on the inside surface of the outside portion or the outside surface of the inside portion.
Out of the forces exerted on the individual members in conjunction with the compression of the rolling elements, forces perpendicular to the axis are cancelled out because the raceway surfaces and the rolling elements are arranged about the axis with equal spacing, respectively. Accordingly, the constitution wherein the axial urging force is generated in conjunction with the relative linear movement of the first member and the second member is embodied easily.

As described above, the invention provides the urging device having the excellent features based on the technical concept entirely different from the prior-art concept. The inventive concept is that the deformed raceway surfaces are utilized for imparting the spring capability between the members linearly movable relative to each other.

An urging device according to an embodiment of the invention will hereinbelow be described with reference to the drawings.

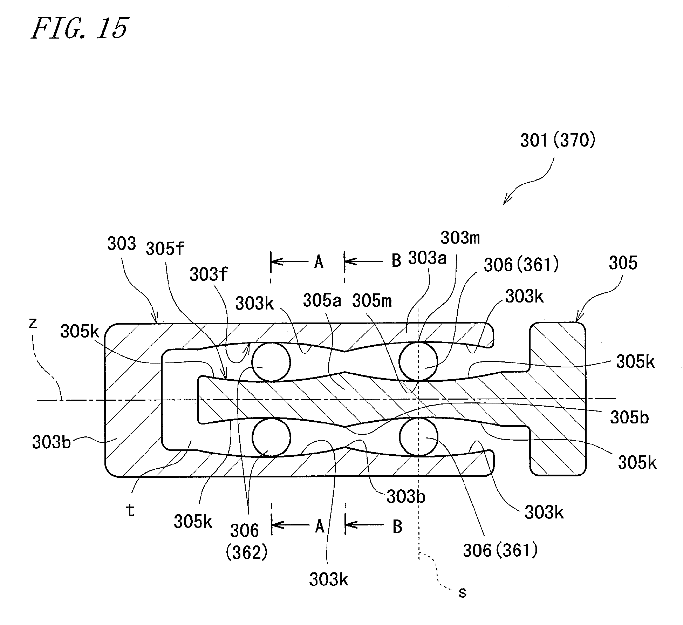

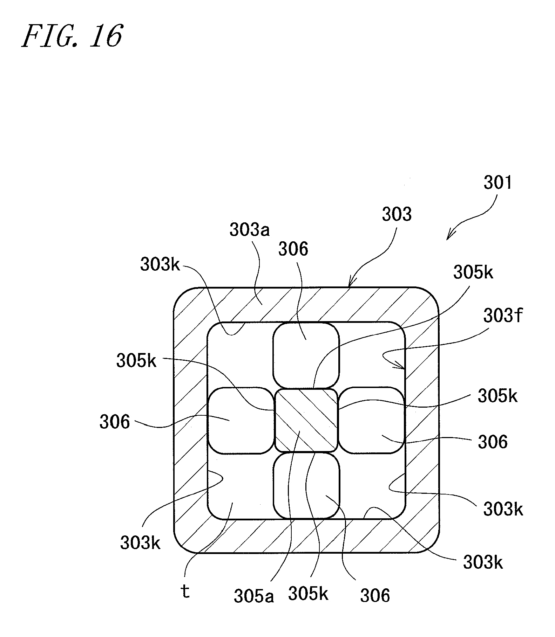

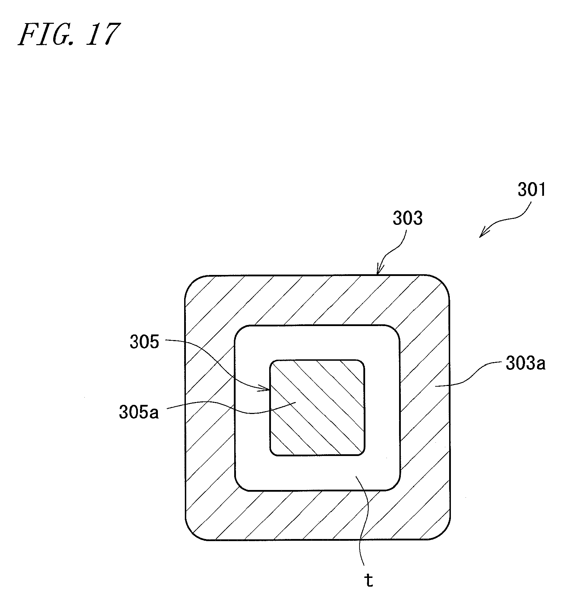

FIG. 15 is a sectional view (longitudinal sectional view) of an urging device 301. FIG. 16 is a sectional view taken on the line A-A in FIG. 15 and FIG. 17 is a sectional view taken on the line B-B in FIG. 15.
The urging device 301 includes: a first member 303 including a first raceway surface 303f; a second member 305 including a second raceway surface 305f opposed to the first raceway surface 303f and linearly movable relative to the first member 303 (relative translational movement); and a cylindrical roller 306 as a rolling element rollably interposed between the first raceway surface 303f and the second raceway surface 305f.

The first member 303 has a substantially rectangular parallelepiped outside face which defines a hollow portion t therein and opens at one longitudinal end thereof to allow the hollow portion t to communicate to the outside. Specifically, the first member 303 includes: a tubular outside portion 303a having a generally square annular shape in section; and a bottom 303b closing the outside portion 303a at the other longitudinal end thereof.
On the other hand, the second member 305 includes an inside portion 305a inserted into the outside portion 303a of the first member 303 through the open end of the first member 303. The cylindrical rollers 306 are rollably interposed between the outside portion 303a of the first member 303 and the inside portion 305a of the second member 305.

The first member 303 and the second member 305 are capable of reciprocating relative to each other like a piston motion in an axial direction (longitudinal direction of the inside portion 305a and the outside portion 303a). When the first member 303 and the second member 305 are linearly moved relative to each other, the individual cylindrical rollers 306 interposed between the first member 303 and the second member 305 are brought into rolling contact movement.
It is noted, as shown in FIG. 15, that the first raceway surface 303f formed on the first member 303 has a cross section in the direction of relative linear movement of the first member 303 and the second member 305 (namely, the direction of an axis z) which section is not in parallel to the direction of relative linear movement. Specifically, the first raceway surface 303f includes a deformed raceway surface 303k, a cross section in the direction of relative linear movement (or axial section as seen in FIG. 15) of which defines a concave curve.
Similarly, the second raceway surface 305f formed on the second member 305 has a cross section in the direction of relative linear movement of the first member 303 and the second member 305 (namely, the axial direction) which section is not in parallel to the direction of relative linear movement. Specifically, the second raceway surface 305f includes a deformed raceway surface 305k, a cross section in the direction of relative linear movement (or axial section as seen in FIG. 15) of which defines a concave curve.
As the first member 303 and the second member 305 are linearly moved relative to each other, therefore, a clamping gap for the cylindrical roller 306 interposed between these deformed raceway surfaces 303k and 305k varies depending upon a relative positional relation between the first member 303 and the second member 305.

In the axial section, the deformed raceway surface 303k of the first raceway surface 303f has a predetermined curvature which is constant. In a cross section perpendicular to the axial direction (FIG. 16), the deformed raceway surface 303k does not have a curvature. Namely, the deformed raceway surface 303k is defined by a circumferential surface. This same holds for the deformed raceway surface 305k.
That is, the deformed raceway surface 305k of the second raceway surface 305f has a predetermined curvature in the axial section and the curvature is constant. In addition, the deformed raceway surface 305k is defined by a circumferential surface having no curvature as seen in a cross section perpendicular to the axial direction (FIG. 16). As compared with a case where the deformed raceway surfaces are defined by free-form surfaces, the deformed raceway surfaces 303k, 305k defined by the circumferential surfaces are easier to design or work.

On the first raceway surface 303f, the deformed raceway surfaces 303k are continuously arranged in the axial direction z. Specifically, the deformed raceway surfaces 303k are disposed on one axial end side (the open-end side of the first member 303) and on the other axial end side (the bottom-303b side of the first member 303) in adjoining relation. Hence, the arrangement provides the maximum axial range of the respective deformed raceway surfaces 303k, contributing to the expansion of the range of relative movement in which the urging force is obtained.
Similarly, the deformed raceway surfaces 305k are continuously arranged on the second raceway surface 305f in the axial direction z. Specifically, the deformed raceway surfaces 305k are disposed on one axial end side (the open-end side of the first member 303) and on the other axial end side (the bottom-303b side of the first member 303) in adjoining relation. Hence, the arrangement provides the maximum axial range of the respective deformed raceway surfaces 305k, contributing to the expansion of the range of relative movement in which the urging force is obtained.

The deformed raceway surface 303k and the deformed raceway surface 305k have the same curvature with respect to the axial section. In an initial state shown in FIG. 15, the axial range of the deformed raceway surface 303k is the same as that of the deformed raceway surface 305k opposed to the deformed raceway surface 303k of interest. This feature also contributes to the expansion of the range of relative movement in which the urging force is obtained. The initial state means a state where the urging force is not exerted between the first member 303 and the second member 305. In the axial section of FIG. 15, a tangent (not shown) at the deepest point 303m of the deformed raceway surface 303k is parallel to the axis z.
Similarly, a tangent at the deepest point 305m of the deformed raceway surface 305k is parallel to the axis z. In the sectional view of FIG. 15 showing the initial state, curvature centers (not shown) of the deformed raceway surface 303k and deformed raceway surface 305k are on a straight line s connecting the deepest point 303m of the deformed raceway surface 303k with the deepest point 305m of the deformed raceway surface 305k (see FIG. 15).

As seen from FIG. 15 and FIG. 16, the urging device 301 of the embodiment possesses respective sets of eight deformed raceway surfaces 303k and 305k.
As shown in FIG. 16, the deformed raceway surfaces 303k are individually provided on the four inside surfaces of the outside portion 303a having the generally square shape in section. Namely, the deformed raceway surfaces 303k are arranged about the axis z with equal spacing. Likewise, the deformed raceway surfaces 305k are individually provided on the four outside surfaces of the inside portion 305a having the generally square shape in section. Namely, the deformed raceway surfaces 305k are arranged about the axis z with equal spacing.
As described above, respective pairs of deformed raceway surfaces 303k and the deformed raceway surfaces 305k are disposed on the one axial end side and on the other axial end side in adjoining relation. Hence, a total of eight deformed raceway surfaces 303k and deformed raceway surfaces 305k are provided, respectively. That is, eight pairs of deformed raceway surface 303k and deformed raceway surface 3051 are formed in the above initial state. One rolling element (cylindrical roller 306) is disposed for each pair of deformed raceway surface 303k and deformed raceway surface 305k.
Therefore, the urging device 301 possesses a total of eight cylindrical rollers 306. Thus, four cylindrical rollers 306 disposed on the one axial end side constitute a first cylindrical-roller row 361 and four cylindrical rollers 306 disposed on the other axial end side constitute a second cylindrical-roller row 362. Each of the roller rows has the cylindrical rollers arranged about the axis with equal spacing (at 90° angular space intervals).

In the urging device 301 constituted as described above, the deformed raceway surface 303k and the deformed raceway surface 305k progressively narrow the clamping gap for the cylindrical roller 306 as allowing the rolling movement thereof in conjunction with the relative linear movement of the first raceway surface 303f and the second raceway surface 305f so as to impart the urging force between the first member 303 and the second member 305 in a direction to eliminate the relative displacement between the first raceway surface 303f and the second raceway surface 305f caused by the above relative linear movement. A detailed description is made on this regard hereinbelow.

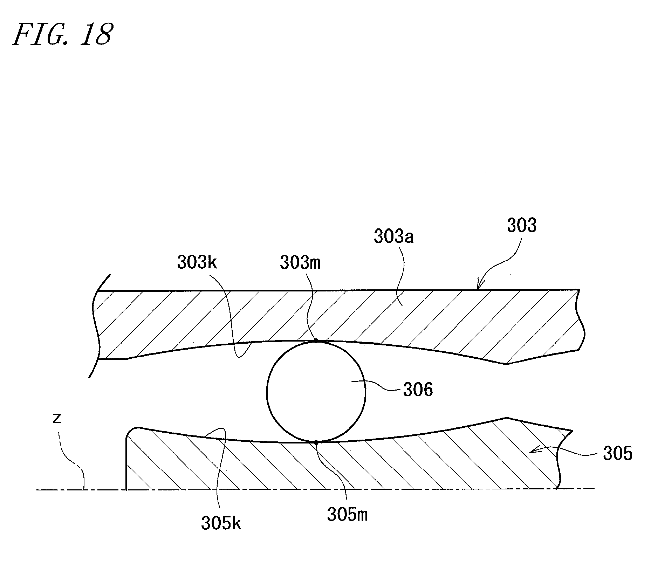

FIG. 18 is an enlarged sectional view showing a neighborhood of one cylindrical roller 306 of the urging device 301 in the initial state shown in FIG. 15. In this initial state, the deepest point 303m of the deformed raceway surface 303k is aligned with the deepest point 305m of the deformed raceway surface 305k in the axial direction. The cylindrical roller 306 is in contact with the deepest point 303m and the deepest point 305m. As described above, the clamping gap for the cylindrical roller 306 varies according to the relative linear movement of the first member 303 and the second member 305.
The clamping gap is maximized in the initial state. In the initial state, therefore, a compressive stress exerted on the cylindrical roller 306 by the deformed raceway surfaces 303k, 305k is at the minimum value (e.g., 0). The initial state is designed such that a distance between the deepest point 303m of the deformed raceway surface 303k and the deepest point 305m of the deformed raceway surface 305k is substantially equal to a diameter of the cylindrical roller 306 and that a respective clearance between the cylindrical roller 306 and each of the raceway surfaces 303k and 305k is substantially zero. However, a minor clearance in the range of -0.03mm to 0.03mm (plus clearance or minus clearance), for example, may also be provided.

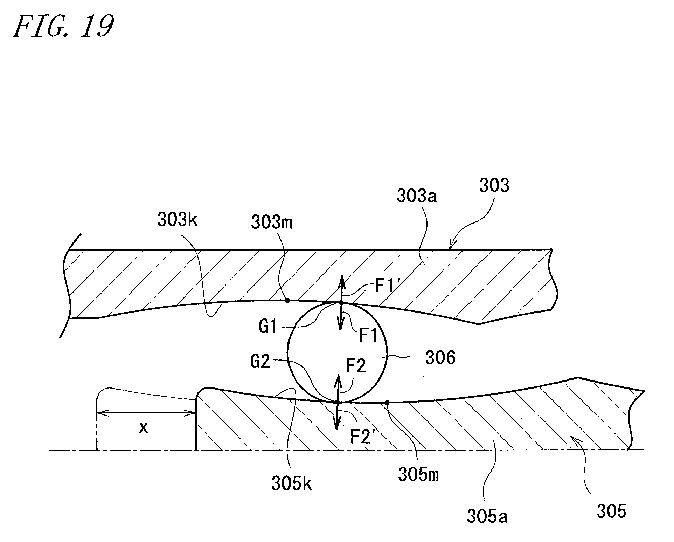

When the first member 303 and the second member 305 are linearly moved relative to each other from the initial state, the relative linear movement brings the cylindrical roller 306 into rolling movement. This rolling movement displaces the contact positions of the cylindrical roller 306 with these raceway surfaces 303k, 305k from the deepest points 303m, 305m, so that the clamping gap for the cylindrical roller 306 is progressively decreased from that of the initial state.
Now, description is made on a stationary state (shown in FIG. 19) wherein the first member 303 and the second member 305 are axially displaced a distance x relative to each other from the initial state shown in FIG. 18 by applying an axial external force to the second member 305 with the first member 303 fixed to place and the above external force is balanced with the urging force of the urging device 301 so that the first and second members stand still. In the state of FIG. 19 wherein the first and second members are relatively displaced by the above distance x, the clamping gap for the cylindrical roller 306 is decreased from the diameter thereof.
Therefore, the cylindrical roller 306 undergoes the elastic compressive deformation as subjected to perpendicular forces F1, F2 from the centers G1, G2 of its contact positions with these raceway surfaces 303k, 305k. On the other hand, the first member 303 and the second member 305 are subjected to perpendicular forces F1', F2' as reaction forces to the above perpendicular forces F1, F2. It is noted here that the perpendicular force F1' has a component perpendicular to the axial direction (upward component shown in FIG. 19) and an axial component directed toward the one axial end (rightward component shown in FIG. 19).
On the other hand, the perpendicular force F2' has a component perpendicular to the axial direction (downward component shown in FIG. 19) and an axial component directed toward the other axial end (leftward component shown in FIG. 19). Thus, the perpendicular force F1' exerted on the first member 303 by the cylindrical roller 306 has the axial component directed toward the one axial end, which component constitutes the urging force in the direction to eliminate the relative displacement between the first member 303 and the second member 305.

FIG. 19 illustrates the example where the second member 305 is moved toward the one axial end relative to the first member 303. In a case where the second member 305 is moved toward the other axial end relative to the first member 303, as well, an urging force in a direction to eliminate the relative displacement between the first member 303 and the second member 305 (the opposite direction to the direction of the case shown in FIG. 19) can be obtained just as described above. Thus, the urging device 301 is adapted to function not only as a compression spring but also as an extension spring.

Since the cylindrical rollers 306 and the deformed raceway surfaces 303k, 305k are arranged about the axis with equal spacing, the forces exerted on the individual members (the cylindrical rollers 306, the first member 303 and the second member 305) in the direction perpendicular to the axis are cancelled out regardless of the relative displacement between the first member 303 and the second member 305. Hence, the first member 303 and the second member 305 are allowed to move linearly relative to each other in the axial directions.

As described above, the deformed raceway surface 303k and the deformed raceway surface 305k each define the concave curve. Furthermore, the deformed raceway surfaces 303k, 305k constitute the smooth continuous curved surface, respectively. Accordingly, unless the contact positions of the cylindrical roller 306 with the raceway surfaces 303f, 305f reach boundary positions 303b, 305b between respective pairs of adjoining raceway surfaces, the clamping gap for the cylindrical roller 306 is progressively varied in conjunction with the relative displacement between the first member 303 and the second member 305.
Then, the urging force induced by the relative movement between the first member 303 and the second member 305 and directed to eliminate the relative displacement between these members 303, 305 is imparted between these members 303, 305, as described above. Accordingly, this urging device 301 may replace the conventional compression spring, extension spring and the like. In short, the urging device 301 may be used for the purpose of imparting spring elasticity between members linearly moved relative to each other.

The urging device 301 is adapted to impart the urging function (hereinafter, also referred to as spring capability) by means of the simple structure without the coil spring or the like. As compared with the conventional urging member, therefore, this urging device can suppress deterioration resulting from continuous operation or change in characteristics with time, achieving the extended service life.
Unlike the conventional urging member, this urging device negates the need for the peripheral members such as joints for connecting the urging members with the second and first members which are linearly moved relative to each other. Hence, the urging device has the simplified peripheral structure so as to achieve the reduction of the number of parts, the reduced assembly cost, the increased reliability, and the size reduction thereof.

The urging device 301 is the member which also has a function to bear a load exerted between the first member 303 and the second member 305 (load acting in the direction to compress the cylindrical roller 306).
Further, the urging device 301 is also adapted to bear a moment load exerted between the first member 303 and the second member 305 by the cylindrical roller 306. Specifically, the urging device 301 is capable of even bearing the above moment load because the urging device has the double row structure including the four first-row cylindrical rollers 361 disposed on the one axial end side and the four second-row cylindrical rollers 362 disposed on the other axial end side.
What is more, the urging device 301 is designed to be capable of bearing moment loads in all directions because the cylindrical rollers 306 interposed between the inside portion 305a and the outside portion 303a are disposed on the four sides of the inside portion 305a, as shown in FIG. 16. The invention is not limited to the above constitution where the cylindrical rollers 306 are arranged in double rows. The cylindrical rollers may be arranged in a single row or in three or more rows.

The urging device 301 is dramatically increased in the degree of freedom of designing the spring rigidity and the like, as compared with the conventional urging member. Specifically, the urging device has quite a high degree of design freedom because the spring rigidity or the like of the urging device may be designed freely by modifying the design of the deformed raceway surface (curvature, position of curvature center and the like) or adjusting the rigidities or the like of the individual components (the cylindrical roller 306, the first member 303 and the second member 305).
This makes it possible to define a wide range of characteristic such as spring rigidity without changing the sizes (constitutions) of the members. The conventional coil spring exhibits a linear (constant) relation between the relative displacement and the spring rigidity. In contrast, the urging device 301 is further capable of varying the spring rigidity freely according to the relative displacement. For example, the spring rigidity may be varied in nonlinear relation to the relative displacement.

The urging device 301 has the constitution wherein the clamping gaps for all the cylindrical rollers 306 as the rolling element are uniformly varied according to the relative linear movement of the members 303, 305. Such a constitution can efficiently provide the spring capability because the individual rolling elements may exert an equal urging force to the members 303, 305. Further, the urging device is extended in the service life because the loads on the individual cylindrical rollers 306 are equalized.

The range of relative linear movability (possible stroke) of the urging device of the invention depends upon the design of the deformed raceway surfaces 303k, 305k, the ranges of elastic deformation of the rolling elements 6 and the individual members 303, 305, the ranges of location of the deformed raceway surfaces 303k, 305k and the like. If no restriction is imposed on the force of relatively displacing the first member 303 and the second member 305 (hereinafter, also referred to as "relative displacing force"), the urging device of the invention normally permits the relative linear movement till any one of the following states "A" to "C" is established:
A: The elastic deformation of any one of the members 303, 305 and the cylindrical rollers 306 reaches the limit of an elastic deformable range;
B: Any one of the cylindrical rollers 306 is deviated from the raceway surfaces 303f, 305f and drops off from the urging device 301; and
C: The relative displacement is limited due to interference or the like between the first member 303 and the second member 305.
Depending upon the design of the raceway surfaces 303f, 305f, the deformed raceway surfaces 303k, 305k or the like, the cylindrical roller 306 can be moved to an adjoining deformed raceway surface by the relative linear movement of the first member 303 and the second member 305. In the aforementioned urging device 301 (see FIG. 15), the first member 303 and the second member 305 may interfere with each other or the dropout of the cylindrical roller 306 may occur if the relative displacement between the first member 303 and the second member 305 is increased too much.
Hence, the cylindrical roller 306 is never moved beyond the boundary positions 303b, 305b to the adjoining deformed raceway surfaces 303k, 305k. The urging device 301 may also have a constitution, for example, wherein a plurality of auxiliary deformed raceway surfaces 303k, 305k (free from the cylindrical roller 306) are continuously arranged in the axial direction thereby permitting the cylindrical roller 306 to be moved to the adjoining deformed raceway surfaces.
In this case, it is possible to set a certain limit to the relative displacing force exerted between the first member 303 and the second member 305. Hence, the urging device of the invention may also have an additional function to prevent an excessive relative displacing force from being exerted between the first member 303 and the second member 305.

The invention does not particularly limit the configuration and the like of the rolling element, which may have any configuration that is rollable in conjunction with the relative linear movement of the first member and the second member. Accordingly, the rolling element is not limited to the cylindrical roller illustrated by the foregoing embodiments but may be a ball, tapered roller or the like.
Any rolling element used in the conventional rolling bearings may be applied as needed. A hollow rolling element prone to elastic compressive deformation (such as a hollow cylindrical roller or hollow ball) may also be used in the interest of increasing the degree of freedom of defining the spring rigidity. A suitable material of the rolling element may be selected according to the performance required of the urging device.

As described above, the urging force provided by the urging device of the invention can be explained by primarily taking account of local elastic deformation of the rolling element at its contact region with the first and second members during the relative movement of the rolling element. However, macroscopic elastic deformation of the first member and/or the second member may be increased by, for example, decreasing the thickness of the first member and/or the second member.
An alternative constitution may also be made such that the rolling element is elastically deformed very little but the first or second member primarily undergoes the elastic deformation so as to impart the urging force. The degree of design freedom of the invention is further increased by adding the rigidity of the first or second member as a design element.
The rigidity of the first or second member (rigidity against a pressing force of the rolling element) may be varied by changing the thickness (mean thickness), thickness distribution or material of the first or second member. For instance, the outside surface of the first member 303 of the above urging device 301 may be made uneven. Otherwise, the second member 305 may have a hollow structure.

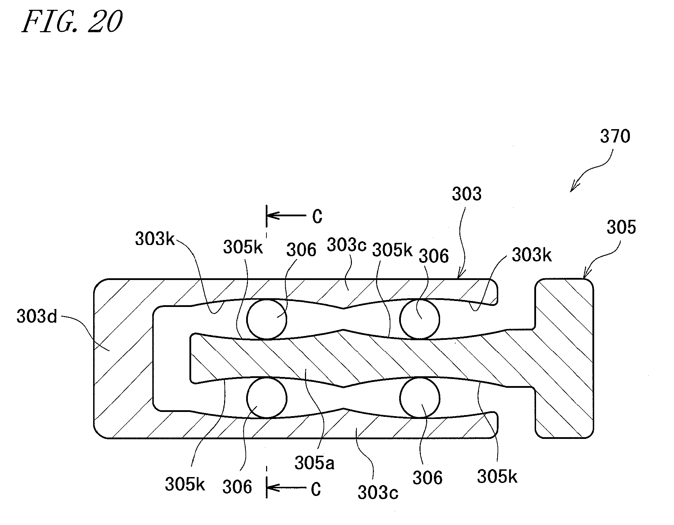

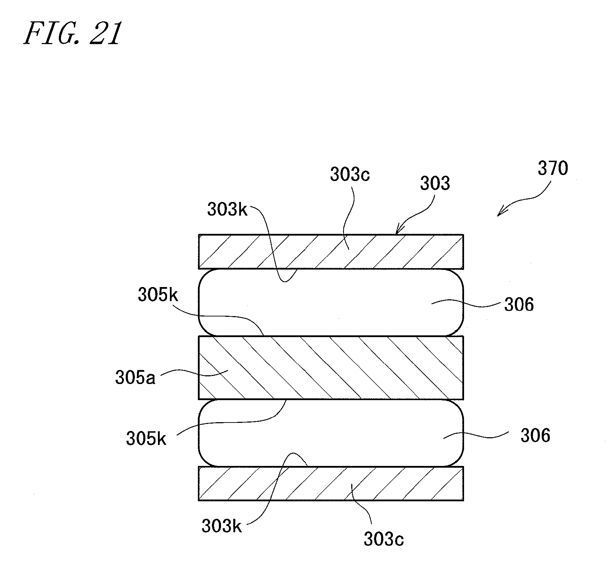

As a modification of the invention, the following urging device may also be contemplated.
The urging device 301 may have a constitution omitting the bottom 303b (namely, the first member 303 consists of the outside portion 303a alone). While the urging device 301 has the constitution wherein the inside portion 305a is disposed internally of the tubular outside portion 303a, the urging device may not be constituted this way.
As illustrated by an urging device 370 shown in FIG. 20 as an exemplary modification, a constitution may be made such that the first member 303 is a member having a U-shaped section and including two outside plate portions 303c in opposing relation and a connecting portion 303d interconnecting these plate portions at individual one ends thereof and that the inside portion 305a of the second member 305 is disposed between these outside plate portions 303c. FIG. 20 is an axial sectional view of the urging device 370. FIG. 21 is a sectional view of the urging device 370 taken on the line C-C in FIG. 20.

According to the urging device 301, the first raceway surface 303f and the second raceway surface 305f have the generally square sectional shapes. An alternative constitution, for example, may also be made such that these raceway surfaces 303f, 305f have sectional shapes of an equilateral n-gon (n represents an integer of 3 or more) such as a generally equilateral triangle or a generally equilateral pentagon and that the deformed raceway surface is formed on each of the constituent surfaces corresponding to the sides defining the polygonal section. Such a constitution permits the first raceway surfaces 303f, the second raceway surfaces 305f and the rolling elements to be arranged about the axis with equal spacing.

In the urging device 301, all the first raceway surfaces 303f are constituted by the deformed raceway surfaces 303k. However, some of the first raceway surfaces 303f may be constituted by the deformed raceway surfaces 303k. Likewise, some of the second raceway surfaces 305f may be constituted by the deformed raceway surfaces 305k although all the second raceway surfaces 305f of the urging device 301 are constituted by the deformed raceway surfaces 305k.

The following urging device may be contemplated as another exemplary modification of the urging device 301. This urging device has a constitution wherein the first member and the second member are plate-like members opposing each other via the rolling element and opposite surfaces of these members define the first raceway surface and the second raceway surface, respectively, and wherein at least one of the first raceway surface and the second raceway surface includes the above-described deformed raceway surface. In this case, a support portion for supporting the first member and the second member in a manner to permit the relative linear movement of these members is necessary.

While the above-described urging device 301 provides the urging force only in the direction of relative movement (relative translational movement), it is also possible to impart the rotational urging force to the relative rotation (torsion) between the first member 303 and the second member 305. In the above embodiment, the curvature is imparted to the deformed raceway surfaces 303k, 305k in the direction of the relative linear movement of the first member 303 and the second member 305 (axial direction) but is not imparted thereto in a direction perpendicular to the direction of the relative linear movement.
However, the curvature in the direction perpendicular to the direction of the relative linear movement, for example, may be imparted to the deformed raceway surface 303k and the deformed raceway surface 305k in addition to the curvature in the direction of the relative linear movement, whereby the deformed raceway surfaces are configured to impart the rotational urging force between the first member 303 and the second member 305 in a direction to eliminate the phase difference between the first member and the second member which is caused by the relative rotation between the first member and the second member. In this case, it is also possible to impart the rotational urging function (torsion spring capability) between the first member 303 and the second member 305 by employing a ball or the like as the rolling element.

## Claims

1. A pulley assembly for driving engine auxiliaries by means of a belt, comprising:
- a cylindrical pulley member having the belt trained about an outer periphery thereof and including an outer raceway surface on an inner periphery thereof;
- an inside member including, on an outer periphery thereof, an inner raceway surface opposing the outer raceway surface and disposed in relatively rotatable relation to the pulley member; and
- a rolling element rollably interposed between the outer raceway surface and the inner raceway surface,
wherein at least one of the inner raceway surface and the outer raceway surface is at least partially formed with a deformed raceway surface which, in conjunction with a relative rotation between the pulley member and the inside member, progressively narrows a clamping gap for the rolling element as allowing the rolling movement of the rolling element and imparts a rotational urging force between the pulley member and the inside member in a direction to eliminate a phase difference between the pulley member and the inside member, the phase difference caused by the relative rotation.

2. A pulley assembly according to Claim 1,
wherein the inside member is unitarily rotatably mounted to an input shaft of an alternator whereby the pulley assembly is used as an alternator pulley assembly.

3. A pulley assembly according to Claim 1,
wherein the inside member is unitarily rotatably mounted to a crankshaft whereby the pulley assembly is used as crankshaft pulley assembly.

4. A pulley assembly according to Claim 1,
wherein a rolling bearing is interposed between the pulley member and the inside member for relatively rotatably supporting these members.

5. An auto tensioner comprising:
- a swing arm including a cylindrical base end portion formed with an outer raceway surface on an inner periphery thereof, and an arm extended from the base end portion and having a pulley rotatably fixed thereto, the pulley having a belt trained thereabout;
- a support member including, on an outer periphery thereof, an inner raceway surface opposing the outer raceway surface and relatively rotatably supporting the base end portion thereby swingably supporting the swing arm; and
- a rolling element rollably interposed between the outer raceway surface and the inner raceway surface,
wherein at least one of the inner raceway surface and the outer raceway surface is at least partially formed with a deformed raceway surface which, in conjunction with a relative rotation between the base end portion and the support member, progressively narrows a clamping gap for the rolling element as allowing the rolling movement of the rolling element and imparts a rotational urging force between the base end portion and the support member in a direction to eliminate a phase difference between the base end portion and the support member, the phase difference caused by the relative rotation and wherein the swing arm is urged in a predetermined swinging direction by the rotational urging force.

6. An auto tensioner according to Claim 5,
wherein a rolling bearing is interposed between the base end portion and the support member for relatively rotatably supporting these members.
